(19) Europäisches Patentamt
European Patent Office
Office européen des brevets

(11) EP 0 569 029 B1

(12) **EUROPEAN PATENT SPECIFICATION**

(45) Date of publication and mention
of the grant of the patent:
**22.04.1998  Bulletin 1998/17**

(51) Int Cl.6: **G09G 3/36**, G02F 1/137

(21) Application number: **93107467.8**

(22) Date of filing: **07.05.1993**

(54) **Liquid crystal display device having two metastable states and its driving method**

Flüssigkristallanzeigegerät mit zwei metastabilen Zuständen und Steuerverfahren dafür

Dispositif d'affichage à cristaux liquides à deux phases métastables et sa méthode de commande

(84) Designated Contracting States:
**DE FR GB**

(30) Priority: **07.05.1992  JP 114480/92**
        **02.06.1992  JP 141442/92**
        **16.07.1992  JP 189437/92**
        **17.08.1992  JP 217932/92**
        **07.12.1992  JP 326914/92**
        **07.12.1992  JP 326915/92**

(43) Date of publication of application:
**10.11.1993  Bulletin 1993/45**

(73) Proprietor: **SEIKO EPSON CORPORATION**
**Shinjuku-ku Tokyo 163-08 (JP)**

(72) Inventor: **Tanaka, Takaaki**
**Suwa-shi, Nagano-ken 392 (JP)**

(74) Representative: **Hoffmann, Eckart, Dipl.-Ing.**
**Patentanwalt,**
**Bahnhofstrasse 103**
**82166 Gräfelfing (DE)**

(56) References cited:
**EP-A- 0 422 904**          **EP-A- 0 579 247**
**GB-A- 2 233 106**

- **APPLIED PHYSICS LETTERS, vol.45, no.10, 15 November 1984, NEW YORK US pages 1021 - 1023 SCHEFFER ET AL. 'A new, highly multiplexable liquid crystal display'**
- **APPLIED PHYSICS LETTERS, vol.43, no.4, 15 August 1983, NEW YORK US pages 342 - 344 MEYER ET AL. 'Discovery of dc switching of a bistable boundary layer liquid crystal display'**

## Description

Field of the Invention

This invention relates to a liquid crystal display device that uses a chiral nematic liquid crystal, and more particularly it relates to a liquid crystal display device driven by a simple matrix driving by utilizing bistable switching and its driving method.

Description of the Prior Art

Currently, the liquid crystal display devices being used as display devices for office equipment, etc., use a twisted nematic (TN) liquid crystal or a supertwisted nematic (STN) liquid crystal. For example, these display systems, which are described by M. Schadt and W. Helfrich in *Appl. Phys. Lett.* 18 (1971) 127 or by T. J. Scheffer and J. Nehring in *Appl. Phys. Lett.* 45 (1984) 1021, do not have a memory effect, and therefore they are driven by a simple matrix driving method using voltage averaging or an active matrix driving method in which a transistor or other active element is provided at each picture element.

Other systems are being researched in addition to these, though they have not reached the application stage. For example, high speed technologies for voltage averaging are disclosed in JP-A-59-219720 and JP-A-60-196728, and systems that utilize bistable switching are disclosed in JP-B-1-51818, JP-B-3-26368 and JP-A-59-58420.

Problems the Invention is to Solve

However, the above prior art technologies have the following problems. When a twisted nematic liquid crystal is driven by voltage averaging, the ratio of the voltage VON for selecting the ON condition to the voltage VOFF for selecting the OFF condition is given by the following equation where the number of scanning lines is N.

$$V_{ON}/V_{OFF} = ((N^{1/2} + 1)/(N^{1/2} - 1))^{1/2}$$

As can be seen from this equation, since VON/VOFF approaches 1 as N becomes large, the contrast ratio falls. Considering the electrooptical characteristics of current liquid crystal devices, N is limited to approximately 500. Therefore, it is impossible to use this system to realize display devices for workstations, etc., requiring high precision displays. Also, the display characteristic is greatly dependent on the viewing angle, and the switching time is long.

The technology disclosed in the aforementioned JP-A-60-196728 is aimed at shortening the above switching time. By this means, the switching from ON to OFF can be speeded up by giving the pretilt angle $\theta_1$ on the lower substrate (angle formed between the director vector in contact with the liquid crystal alignment layer on the substrate and the substrate surface) and the pretilt angle $\theta_2$ on the upper substrate opposite signs. Also, the technology disclosed in the aforementioned JP-A-59-219720 is aimed at stabilizing the operating condition by adding a chiral substance to the liquid crystal material. However, since the devices of the above mentioned documents do not have bistability and operate by a voltage averaging method, they are not suited to high precision display devices.

Prior art devices having bistability or multi-stable states are suited to high definition display using many scanning lines when switching between the metastable states can be performed selectively with a suitable voltage waveform, but each has its own inherent problems.

For example, since the device disclosed in JP-B-1-51818 (US-A-4,239,345) has bistability, information that has been written can be retained for a long period even without using active elements. However, since switching between the two stable states is basically performed by rapid cut off of the applied voltage and its gradual decline over approximately one second, this technology is not suited to simple matrix driving and its writing speed is extremely slow. Actually, JP-B-1-51818 (US-A-4,239,345) only describes the switching principle and does not disclose a method for simple matrix driving.

The technology disclosed in JP-A-59-58420 can select whether to write or not by controlling the applied voltage, but in order to clear the display, the liquid crystal layer must be heated until it takes on an isotropic phase. An extremely high voltage is required for writing.

Also, in these liquid crystal displays having bistability or multi-stable states, the stable state used for display is often not sufficiently stable, and therefore the orientation state of the liquid crystal in a condition in which the power to the device is cut off changes to the orientation state of the lowest energy. Particularly in cases in which the initial state such as that used in this invention and the orientation state used in display are different, when write scanning is performed on the initial orientation state at the time of power up, three orientation states exist together, though only for a short period, and degrade display quality.

The invention is intended to solve the above problems, and its purpose is to offer a high definition, high precision liquid crystal display device that can be driven by simple matrix driving.

Means for Solving the Problems

This object is achieved with a liquid crystal display device and its driving method as claimed.

Multiplex driving can be performed by using the voltage applied during the period the selected metastable state is maintained as a pulse lower than the threshold value in the two metastable states.

Assuming the directions of rubbing on the pair of transparent electrode substrates form an angle $\Phi_r$, the spiral pitch of the chiral nematic liquid crystal is adjusted by adding chiral material so that the twist angle in the initial state before voltage is applied is roughly $\Phi_r$.

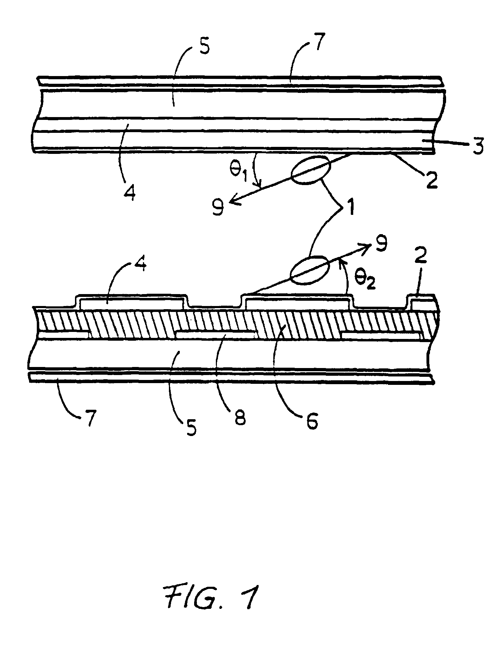

Assuming the angles formed by the director vector in contact with the liquid crystal alignment layer on the substrates and the substrate surfaces are $\theta_1$ and $\theta_2$, respectively, in the initial state, $\theta_1$ and $\theta_2$ preferably have mutually opposite signs as shown in FIG. 1. That is, if the twist angle of the initial state of the chiral nematic liquid crystal is 180 degrees, then the above two director vectors are roughly anti-parallel.

A chiral nematic liquid crystal having two metastable states different from its initial state as relaxation states means that assuming, for example, it has a twisted structure with a twist angle of 180 degrees in its initial state, it has a structure wherein one twist angle is 0 degree (uniform state) and the other twist angle is 360 degrees in its metastable states. Relaxation to one of the metastable states after Frederick's transition depends on the waveform of the applied pulse voltage, and both metastable states have the property of spontaneously relaxing to the initial state.

The twist angle $\Phi$ in the initial state is not limited to 180 degrees and can be set to any desired angle. For example, a liquid crystal display device with a twist angle of 90 degrees in the initial state has a twisted structure wherein the twist angles in the metastable states are -90 degrees and 270 degrees, respectively, and it has been confirmed experimentally that switching between those metastable states is possible.

When the invention is applied to a liquid crystal display device that performs multiplex driving, the drive voltages are divided up into the voltage applied in the first period to generate Frederick's transition in the liquid crystal, the voltage applied in the following second period to select one of the two metastable states and the voltage applied in the third period, and all are voltage pulses. In the first period, a voltage pulse with a sufficiently large absolute value to bring about Frederick's transition can be applied, and the polarity of the voltage pulse can be changed in the first period. The voltage applied in the second period is selected using the critical value that generates one of the metastable states as a reference, namely the desired metastable state can be selected by a voltage pulse with a voltage exceeding the critical value and a voltage pulse not exceeding the critical value, respectively. When a voltage pulse whose absolute value is zero, i.e., no voltage, is applied to the liquid crystal element in the second period following the voltage pulse applied in the first period, one of the metastable states is formed, and if the absolute value of the applied voltage pulse exceeds zero but does not exceed the critical value, the same state is set. However, if a voltage pulse is applied in the second period whose absolute value exceeds the critical value, then it means the other metastable state is formed.

In the first period in which Frederick's transition is brought about, a voltage pulse with an absolute value greater than both the threshold value in the initial state and those in the two metastable states is applied. In the second period, which follows the first period, a voltage pulse is applied for selecting one or the other arrangements of the two metastable states for the liquid crystal molecule arrangement. A voltage pulse with the opposite polarity or same polarity as the polarity of the voltage pulse applied immediately before the second period, i.e., at the end of the first period, or with an absolute value of zero is selected for this voltage pulse.

When the twist angle of the liquid crystal molecules in the initial state is $\Phi$, the twist angles in the two metastable states generated as relaxation states after applying a pulse voltage group in the initial state are roughly ($\Phi$-180 degrees) and ($\Phi$+180 degrees), and by applying a voltage pulse, whose absolute value exceeds the critical value, immediately after establishing the first period in which the voltage pulse group that generates a Frederick's transition in the initial state and two metastable states is applied, an orientation state whose twist angle is roughly ($\Phi$-180 degrees) is selected, while applying a voltage pulse whose absolute value does not exceed the critical value or whose absolute value is zero makes it possible to select an orientation state whose twist angle is roughly ($\Phi$+180 degrees).

The third period is established immediately after the second period. The absolute value of the voltage pulse applied in the third period has a value lower than the threshold value existing between the two metastable states and maintains the selected metastable state.

Action

Below is an explanation of the relationship between Frederick's transition and the metastable state selected following it. FIG. 29 (a) shows an example of the waveform of the voltage pulse applied in the first period $T_1$ and the second period $T_2$. In the figure, the voltage of the voltage pulse applied in $T_1$ is $V_e$ and the voltage of voltage pulse applied in $T_2$ is $V_w$. Their relationship is shown in (b) of the same figure, where $|V_e|$ is the vertical axis and $V_w$ is the horizontal axis and the metastable states of a chiral nematic liquid crystal, which has a 180-degree twisted structure in its initial state, are shown in areas $a_1$, $a_2$, which show a metastable state of a twist angle of 0 degree, and in areas $b_1$, $b_2$, $b_3$ (hatched areas), which show a metastable state of a twist angle of 360 degrees. Notice that metastable states also exist in areas $b_1$, $b_3$. $V_o$ is the voltage (reset voltage) required to bring about Frederick's transition, and $V_{th1}$, $V_{th2}$ indicate the critical values for the state in $a_1$, $a_2$ and the state in $b_1$-$b_3$, respectively. When

$$|V_e| > V_o \text{ and } |V_{th1}| < |V_w| < |V_{th2}|$$

in (b) of the same figure, then the metastable states of

$a_1$, $a_2$ are selected, and when

$$\left|V_e\right| > V_o \text{ and } \left|V_w\right| < \left|V_{th1}\right|$$

or

$$\left|V_e\right| > V_o \text{ and } \left|V_w\right| > \left|V_{th2}\right|$$

then it indicates that the metastable state of $b_1$-$b_3$ is selected. In the embodiments described below, the state of $a_1$ in the first to the sixth embodiments and the states of $a_1$ and $a_2$ in the seventh to the eleventh embodiments are selected as one metastable state, while the state of $b_2$ in the first to the tenth embodiments and the state of $b_3$ in the eleventh embodiment are selected as the other metastable state. Fig. 29 illustrates a case in which two critical values exist, but the existence of three or more critical values is possible.

In this invention, either metastable state can be created by selecting the effective voltage for the voltage pulse applied in the second period using the respective critical values of $V_{th1}$, $V_{th2}$ above as a reference. Therefore, a case can be considered in which either area $a_1$ ($a_2$) or $b_2$ is selected using the above critical value $\left|V_{th1}\right|$ as a reference. Also, a case can be considered in which either area $a_1$ ($a_2$) or $b_1$ ($b_3$) is selected using $\left|V_{th2}\right|$ as a reference. That is, it is possible to select one of the metastable states in the second period by applying either a voltage that is higher than the critical value or a voltage that is lower than the critical value using the critical values that generate the two metastable states as a reference.

The switching principle of the liquid crystal display device of the invention is explained below. The bistable liquid crystal device disclosed in the aforementioned US-A-4,239,345 (D. W. Berreman) does not perform matrix driving, but it does explain the bistable state as follows. If a voltage sufficiently large enough to bring about Frederick's transition is applied, the liquid crystal molecules in the middle part of the liquid crystal layer (distance from lower substrate surface = liquid crystal layer thickness/2) stand at an angle of about 90 degrees with respect to the substrate surface (this state is referred to as the reset state). If the applied voltage is gradually lowered over about one second following this, then the liquid crystal molecules in the middle reverse the process of orientation change when the voltage was applied and relax to a state parallel with the substrate. The orientation state obtained in this manner is the uniform state. If the applied voltage is cut off suddenly, however, the liquid crystal molecules in the middle move in a direction opposite that when the voltage is gradually lowered due to the flow effect of the liquid crystal. D. W. Berreman referred to this phenomenon as backflow. Since the liquid crystal molecules in the middle continue to move in the opposite direction and lay down in a direction opposite that of the liquid crystal molecules near the substrate surface, they relax in a 360-degree twisted state. The selection of two bistable states is performed by this principle, but since the voltage must be lowered gradually over about one second to achieve relaxation in the uniform state, this technology had no practical application. That is, it was theoretically impossible to apply it to high speed switching by performing multiplex driving in a liquid crystal display device.

However, research by the present inventors revealed the following. That is, by applying a suitable voltage after resetting, backflow occurs and the liquid crystal molecules begin to relax to a 360-degree twisted state, but then the direction orientation change reverses and they begin to return to the original uniform state. If that voltage is larger than a certain value, then they continue to relax to the uniform state, but if it is smaller than a certain value, then their direction of orientation change reverses again and they relax to the 360-degree twisted state. The inventors discovered that this value exists as a critical value. This was confirmed by simulations as well as experimentally. The inventors arrived at the invention by taking advantage of this newly discovered phenomenon.

A liquid crystal electrooptical element of the invention operates as follows. After resetting, a pulse voltage is superposed on the applied bias voltage. Though backflow definitely occurs after resetting, if the peak value or duration of the pulse voltage is greater than a certain value, then the direction of orientation change reverses and the original process is followed so that the liquid crystal molecules relax to the uniform state. If the peak value or duration of the pulse voltage is lower than a certain value, however, the liquid crystal molecules relax to a 360-degree twisted state according to the process described above. Since switching can be performed by adjusting the magnitude of the pulse voltage in this manner, extremely fast switching becomes possible, thus facilitating application to high precision displays. Of course, the liquid crystal electrooptical element of this invention and the liquid crystal electrooptical element disclosed by D. W. Berreman are completely different. The difference between the two is summed up in the operating principle described above.

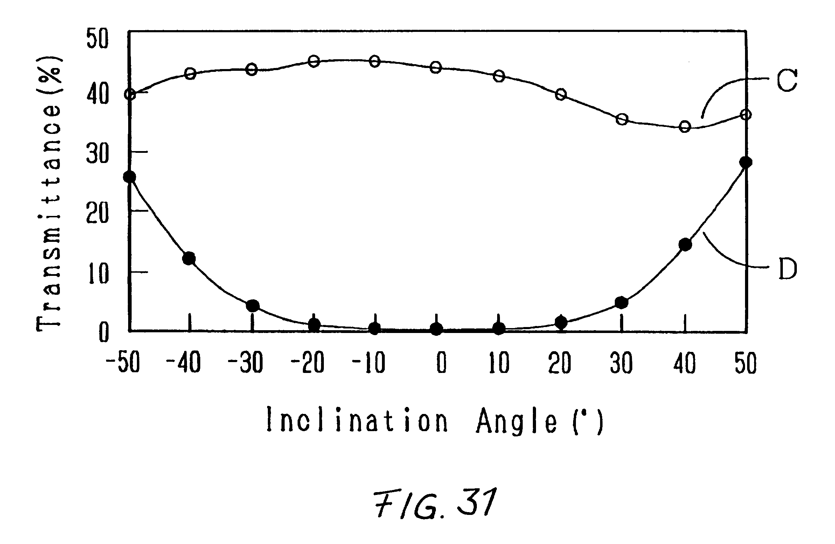

The spectral characteristic of the invention is explained using the liquid crystal display device disclosed in the eighth embodiment described below. FIG. 30 shows the spectral characteristic when an ON condition is selected by switching. The wavelength is plotted on the horizontal axis while the transmittance is plotted on the vertical axis. The plot indicated by A in Fig. 30 is for the element used in this embodiment with a cell gap of 1.8 $\mu$m. A flat characteristic is obtained in a broad wavelength range of visible light, thus indicating good white display. The plot indicated by B in the same figure is the spectral characteristic when a cell gap of 20 $\mu$m is used and is provided for the sake of comparison. The presence of plural peaks indicates that display is colored.

Therefore, the element used in this embodiment of the invention is superior with respect to the purity of display color.

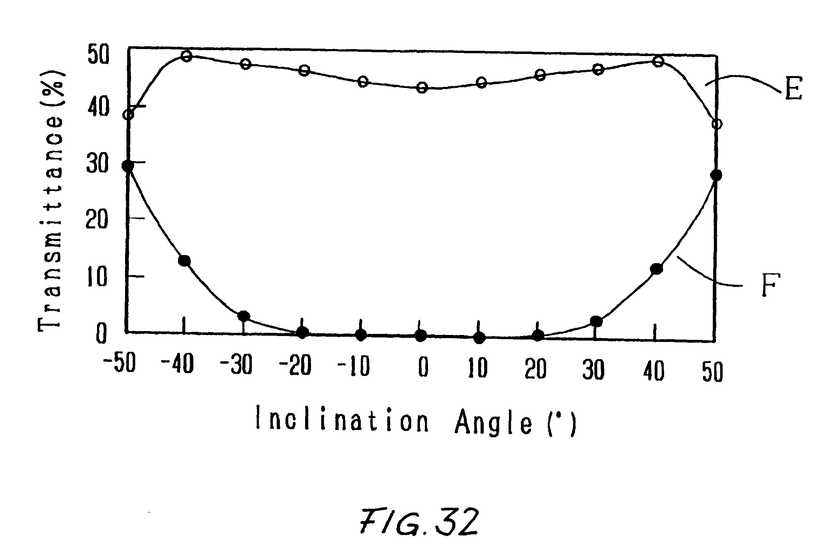

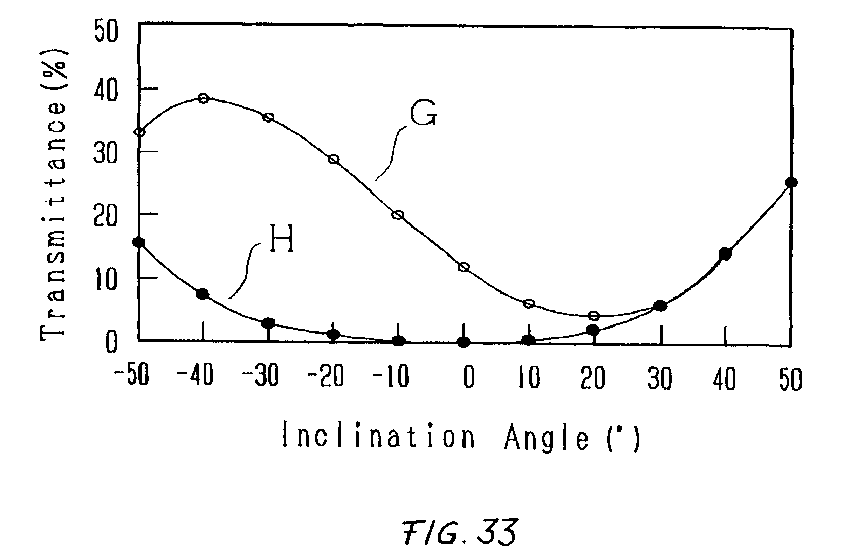

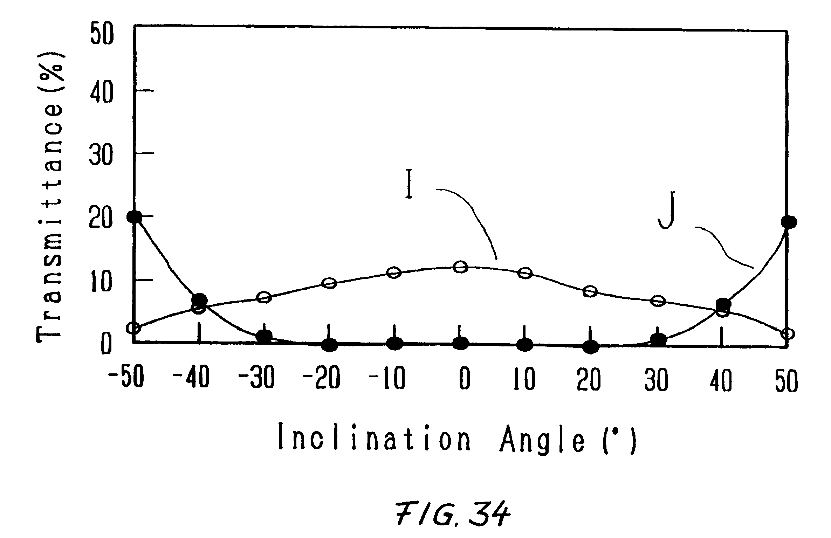

Next, the dependency of transmittance on the viewing angle in the display element of the invention is shown in FIGS. 31 and 32. FIG. 31 shows the transmittance when ON (C in figure) and the transmittance when OFF (D in figure) when the viewing angle is inclined in the axial direction of the liquid crystal molecules at the interface from the substrate normal line. FIG. 32 shows similar plots when the viewing angle is changed in a direction perpendicular to that in FIG. 31. The change in transmittance when ON is small in the axial direction of the liquid crystal molecules and in the direction perpendicular to it (E in figure), and there is no inversion of display in a range of ±50 degrees. F in the figure indicates transmittance when OFF. The above viewing angle characteristic was obtained in this embodiment with a pretilt angle of about 5 degrees at the substrate interface, but for the sake of comparison, the characteristic for a pretilt angle of 45 degrees at the substrate interface is shown in FIGS. 33 and 34. In the figure, the plots indicated by G and I are when ON and the plots indicated by H and J are when OFF. The contrast ratio becomes 1 in a direction approximately 30 degrees from the substrate normal line in the axial direction of the liquid crystal molecules (FIG. 33). In a direction perpendicular to this, inversion of the display occurs at a position at approximately ±40 degrees (FIG. 34). Therefore, the effectiveness of the display element used in an embodiment of the invention can also be seen from the standpoint of the dependency of transmittance on the viewing angle.

Preferred embodiments of the invention will be explained in further detail below with reference to the drawings.

Brief Description of the Drawings

FIG. 1    is a cross section showing the structure of the liquid crystal display device of an embodiment.

FIG. 2    is a diagram showing the optical response corresponding to the driving waveforms of an embodiment.

FIG. 3    is a diagram showing the optical response corresponding to the driving waveforms of an embodiment.

FIG. 4    is a diagram of the circuit for driving the liquid crystal display device of an embodiment.

FIG. 5    is a diagram of the driving waveforms of an embodiment.

FIG. 6    is a diagram of the driving waveforms of an embodiment.

FIG. 7    is a diagram of the driving waveforms and the optical response of an embodiment.

FIG. 8    is an explanatory diagram of the timing of the applied voltage waveforms.

FIG. 9    is a diagram of the driving waveforms of an embodiment.

FIG. 10    is a diagram of the driving waveforms of an embodiment.

FIG. 11    is a diagram of the driving waveforms and the optical response of an embodiment.

FIG. 12    is an explanatory diagram of the timing of the applied voltage waveforms.

FIG. 13    is a diagram of the driving waveforms of an embodiment.

FIG. 14    is a diagram of the driving waveforms of an embodiment.

FIG. 15    is a diagram of the driving waveforms and the optical response of an embodiment.

FIG. 16    is a diagram of the driving waveforms of an embodiment.

FIG. 17    is a diagram of the driving waveforms of an embodiment.

FIG. 18    is a diagram of the driving waveforms and the optical response of an embodiment.

FIG. 19    is an explanatory diagram of the timing of the applied voltage waveforms.

FIG. 20    is a diagram of the driving waveforms of an embodiment.

FIG. 21    is a diagram of the driving waveforms and the optical response of an embodiment.

FIG. 22    is an explanatory diagram of the timing of the applied voltage waveforms.

FIG. 23    is a diagram showing the temporal configuration of an embodiment.

FIG. 24    is a diagram of the driving waveforms of an embodiment.

FIG. 25    is an explanatory diagram of the timing of the applied voltage waveforms.

FIG. 26    is a diagram of the driving waveforms of an embodiment.

FIG. 27    is a diagram of the driving waveforms of an embodiment.

FIG. 28    is a diagram showing the electrode configuration of an embodiment.

FIG. 29    is a diagram showing the selection areas of the metastable states of the invention.

FIG. 30    is a graph showing the optical characteristic of an embodiment.

FIG. 31    is a graph showing the optical characteristic of an embodiment.

FIG. 32    is a graph showing the optical characteristic of an embodiment.

FIG. 33    is a graph showing the optical characteristic of an embodiment.

FIG. 34    is a graph showing the optical characteristic of an embodiment.

The invention is explained in detail below through specific embodiments. FIG. 1 is a cross section of the liquid crystal display device. In the figure, 1 are liquid crystal molecules, 2 is an alignment layer, 3 is an insulating film, 4 are transparent electrodes, 5 are glass substrates, 6 is a flattening layer, 7 are polarizing plates, 8 is a masking layer between picture elements, and $\Theta_1$ and $\Theta_2$ are the pretilt angles of the liquid crystal molecules at the interface. A cell fabricated by forming ITO transparent electrode patterns 4 and applying polyimide alignment layers 2 on glass substrates 5, rubbing the surface, and disposing the substrates opposite each other with the desired gap by means of suitable spacers was used.

First Embodiment

An optically active compound (E. Merck, Darmstadt, S811) was added to the liquid crystal material (Rodic K.K., $\Delta n \sim 0.1$), which demonstrates a nematic phase at room temperature, to adjust it to a helical pitch p of 3.2 μm. The cell comprised polyimide alignment layers rubbed in opposing parallel directions (180 degrees) on the upper and lower substrates separated by a gap d of 2.0 μm. When the above liquid crystal material was infused, the interface pretilt angles near the upper and lower substrates were approximately 4 degrees with opposite signs, and since p/4 < d < 3p/4, the orientation of the liquid crystal molecules took on a 180-degree twisted state with a helical axis in the normal direction of the substrate. The structure of a similar liquid crystal display element is outlined in FIG. 1. We sandwiched the sample obtained in this manner between two polarizing plates whose polarizations were roughly perpendicular to each other, applied the driving waveforms of the invention on the electrodes and evaluated the optical characteristic.

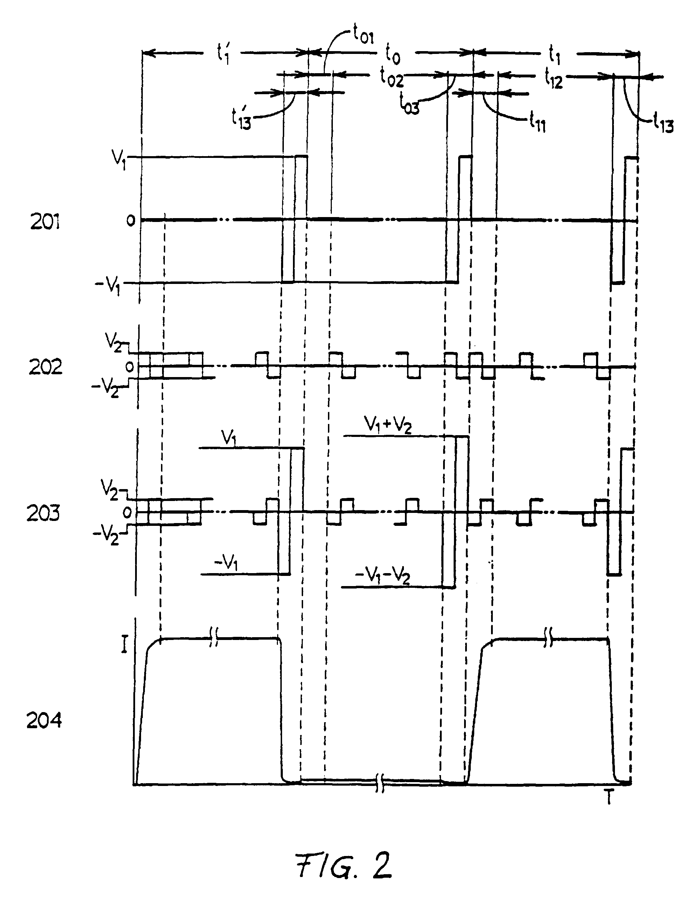

The driving waveforms of this embodiment are shown in FIG. 2. In the figure, 201 is the scanning electrode waveform, 202 is the signal electrode waveform, 203 is a composite waveform of 201 and 202, and 204 is the optical response when 203 is applied to the liquid crystal display element. Also, to indicates the frame (scanning time for one screen) when OFF (i.e., dark state) is selected and $t_1$ and $t_1'$ indicate the frames when ON (i.e., bright state) is selected. $t_{01}$ and $t_{11}$ correspond to selection periods, while $t_{02}$, $t_{03}$ and $t_{12}$, $t_{13}$ correspond to nonselection periods. At the end of the nonselection period, a period is established in which a voltage pulse such as $\pm(V_1 + V_2)$ in $t_{03}$ and $\pm V_1$ in $t_{13}$ and $t_{13}'$ whose absolute value is greater than the threshold value of the element (i.e. the critical value for a Frederick's transition) is applied to bring about Frederick's transition. In OFF selection frame $t_0$, after the $\pm(V_1 + V_2)$ or $\pm V_1$ voltage pulse is applied immediately before selection period $t_{01}$ and Frederick's transition is brought about, a pulse whose voltage absolute value is 0 is applied and the dark state selected in selection period $t_{01}$. In nonselection period $t_{02}$, a pulse whose voltage absolute value is lower than the threshold value of the element is applied, thus maintaining the dark state. In ON selection frame $t_1$, a pulse ($-V_2$) with a polarity opposite that of the pulse applied immediately before it is applied in selection period $t_{11}$ and the bright state (metastable state different from that in the case of $t_0$) is selected. Since a pulse whose voltage absolute value is lower than the threshold value of the element is applied in nonselection period $t_{12}$, the bright state is maintained. When the element was operated at 30°C and with $V_1 = 34.0$ V, $V_2 = 1.7$ V and pulse width $P_w = 700$ μs, the transmittance of the bright state was 44 percent (here and in the following the percentage of the transmittance is based on a transmittance of 100 percent when the two polarizing plates are disposed on the same optical system with their polarization axes parallel) and the contrast ratio between the two states was 65.

Second Embodiment

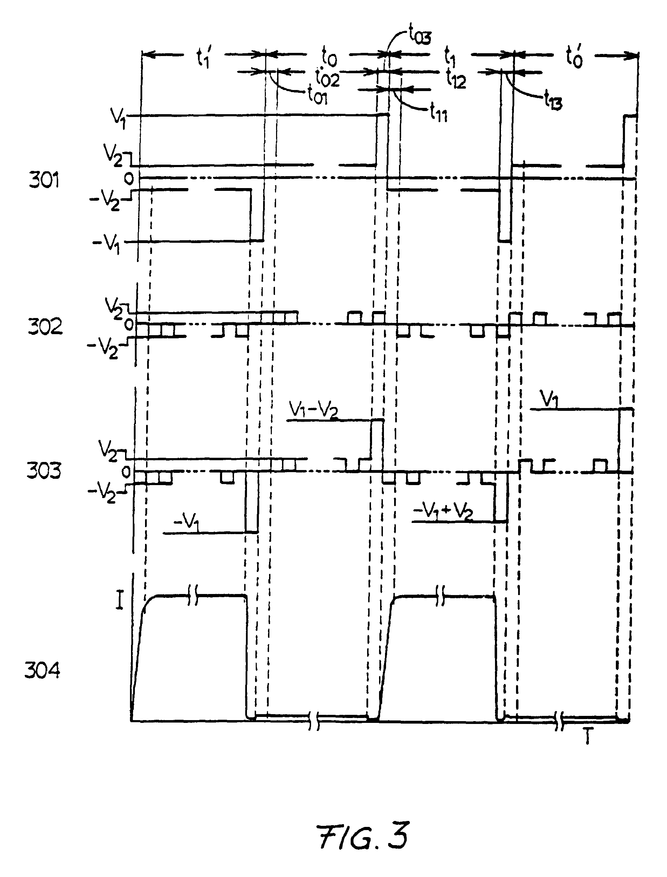

The driving waveforms applied to the liquid crystal display device in the second embodiment are shown in FIG. 3. In the figure, 301 is the scanning electrode waveform, 302 is the signal electrode waveform, 303 is a composite waveform of 301 and 302, and 304 is the optical response when 303 is applied to the liquid crystal display element. $t_0$ and $t_0'$ indicate frames (scanning time for one screen) when OFF (i.e., dark state) is selected, and $t_1$ and $t_1'$ indicate frames when ON (i.e., bright state) is selected. In $t_0$ and $t_1$, $t_{01}$ and $t_{11}$ corre-

spond to selection periods and $t_{02}$, $t_{03}$ and $t_{12}$, $t_{13}$ correspond to nonselection periods. A period is established at the end of the nonselection periods in which voltage pulses such as $V_1 - V_2$ in $t_{03}$ and $-V_1 + V_2$ in $t_{13}$ whose absolute values are greater than the threshold value of the element are applied to bring about Frederick's transition. In OFF selection frame $t_0$, a pulse whose voltage absolute value is 0 is applied in selection period $t_{01}$ and the dark state is selected after a voltage pulse ($-V_1$ in FIG. 3) whose absolute value is greater than the threshold value of the element is applied immediately before selection period $t_{01}$ to bring about Frederick's transition. In nonselection period $t_{02}$, a pulse whose voltage absolute value is lower than the threshold value of the element is applied, thus maintaining the dark state. During ON selection frame $t_1$, a pulse ($-V_2$) whose polarity is opposite that of the pulse applied immediately before it is applied in selection period $t_{11}$ and the bright state is selected. In nonselection period $t_{12}$, a pulse whose voltage absolute value is lower than the threshold value of the element is applied thus maintaining the bright state. When an element same as in the first embodiment was operated at 30°C and with $V_1 = 36.0$ V, $V_2 = 1.8$ V and pulse width $P_w = 1.0$ ms, the transmittance of the bright state was 44 percent and the contrast ratio between the two states was 68. Also, the polarity of the applied waveform is inverted in two temporally adjacent frames in this embodiment, thereby avoiding an excessive DC component to be applied to the element.

Third Embodiment

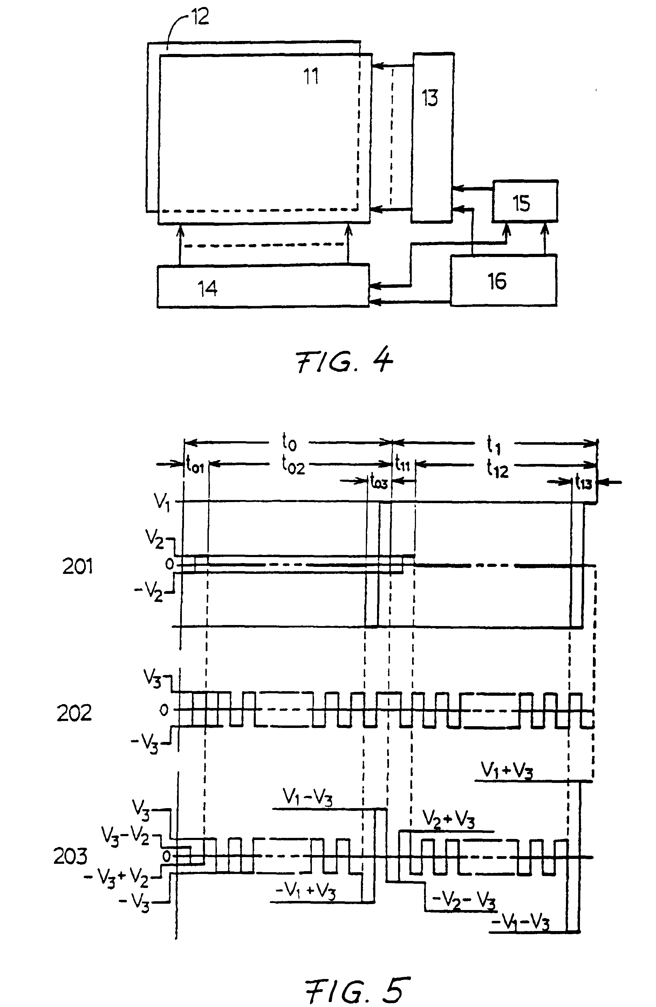

An optically active compound (E. Merck, Darmstadt, S811) was added to the liquid crystal material (E. Merck, Darmstadt, ZLI-1557), which demonstrates a nematic phase at room temperature, to adjust it to a helical pitch p of 3.5 μm. The cell comprised polyimide alignment layers disposed on a scanning electrode group and signal electrode group formed from ITO and rubbed in opposing parallel directions (180 degrees) on the upper and lower substrates separated by a gap d of 1.8 μm. When the above liquid crystal material was infused, the interface pretilt angles near the upper and lower substrates were approximately 4 degrees with opposite signs, and since $p/4 < d < 3p/4$, the orientation of the liquid crystal molecules took on a 180-degree twisted state with a helical axis in the normal direction of the substrate. The structure of the liquid crystal display element is the same as that outlined in FIG. 1. The element of this configuration generates two metastable states with roughly a 0-degree twisted (uniform) state and roughly a 360-degree twisted state depending on the applied driving waveforms. We sandwiched the liquid crystal panel obtained in this manner between two polarizing plates and fabricated a liquid crystal display device using the circuit configuration shown in FIG. 4 to confirm the effectiveness of the invention. In the figure, 11 is the liquid crystal panel, 12 is a backlight used as the illumination means, 13 is the drive circuit (shift registers, logic circuit) for applying voltage to the scanning electrode group of liquid crystal panel 11, 14 is the drive circuit (shift registers, latches, logic circuit) for applying voltage to the signal electrode group, 15 is a reference signal generation circuit, and 16 is a line-sequential scanning circuit (ROM, controller).

The driving waveforms of this embodiment are shown in FIG. 5. In the figure, 201 is the scanning electrode waveform, 202 is the signal electrode waveform, and 203 is a composite waveform of 201 and 202. $t_0$ and $t_1$ indicate frames (scanning time for one screen) in which a 360-degree twisted state (i.e., OFF) and a uniform state (i.e., ON) are selected, respectively. $t_{01}$ and $t_{11}$ correspond to selection periods, while $t_{02}$, $t_{03}$ and $t_{12}$, $t_{13}$ correspond to nonselection periods. At the end of the nonselection periods, a period is established in which a voltage pulse such as $\pm(V_1 - V_3)$ in $t_{03}$ and $\pm(V_1 + V_3)$ in $t_{13}$ whose absolute value is greater than the threshold value of the element is applied to bring about Frederick's transition. In OFF selection frame $t_0$, after a voltage pulse (not shown) whose absolute value is greater than the threshold value of the element is applied immediately before selection period $t_{01}$ and Frederick's transition is brought about, a pulse with the same polarity and whose voltage absolute value is $|V_3 - V_2|$ is applied and the OFF state selected in selection period $t_{01}$. In nonselection period $t_{02}$, a pulse whose voltage absolute value is lower than the threshold value of the element is applied, thus maintaining the same state. In ON selection frame $t_1$, a pulse ($-V_2 - V_3$) with a polarity opposite that of the pulse applied immediately before it is applied in selection period $t_{11}$ and the ON state is selected. Since a pulse whose voltage absolute value is lower than the threshold value of the element is applied in nonselection period $t_{12}$, the same state is maintained. When the element was operated at 30°C and with $V_1 = 30.0$ V, $V_2 = 1.0$ V, $V_3 = 1.5$ V, pulse width $P_w = 250$ μs, and a duty ratio of 1/400 ($t_{01} = t_{11} = 500$ μs, $t_0 = t_1 = 400 \times 500$ μs), selective switching of the element described above was possible.

Fourth Embodiment

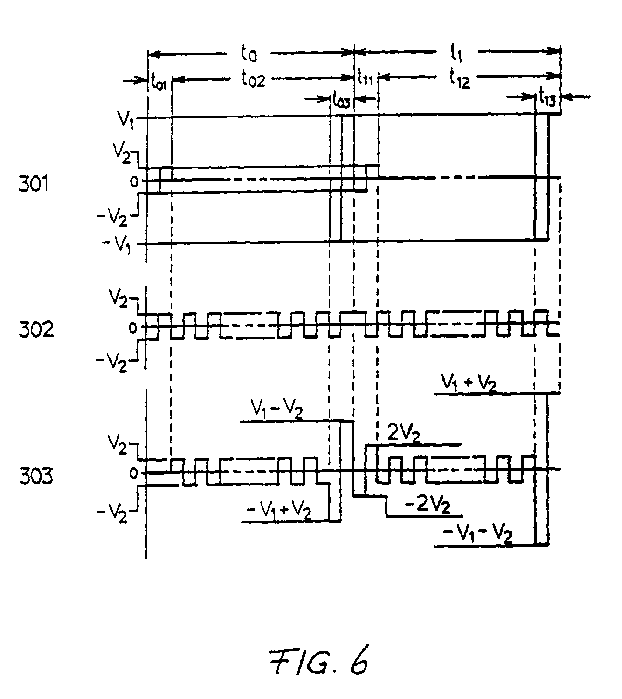

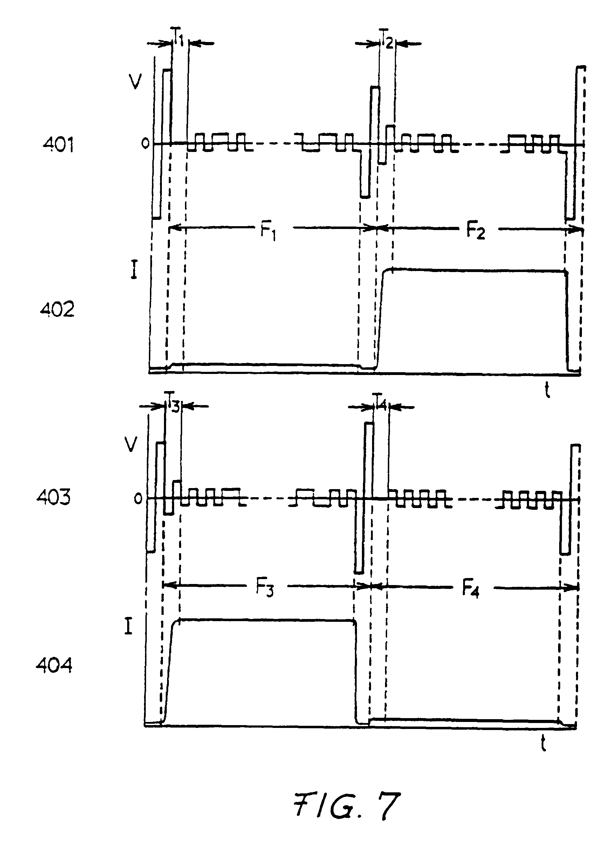

Other driving waveforms applied in the liquid crystal display device of the third embodiment are shown in FIG. 6. In the figure, 301 is the scanning electrode waveform, 302 is the signal electrode waveform and 303 is a composite waveform of 301 and 302. $t_0$ and $t_1$ indicate frames (scanning time for one screen) in which a 360-degree twisted state (i.e., OFF) and the uniform state (i.e., ON) are selected, respectively. $t_{01}$ and $t_{11}$ correspond to selection periods, and $t_{02}$, $t_{03}$ and $t_{12}$, $t_{13}$ correspond to nonselection periods. At the end of the nonselection periods, a period is established in which a voltage pulse such as $\pm(V_1 - V_2)$ in $t_{03}$ and $\pm(V_1 \pm V_2)$ in $t_{13}$ whose absolute value is greater than the threshold value of the element is applied to bring about Frederick's transition. In OFF selection frame $t_0$, after a voltage pulse (not shown) whose absolute value is greater than the threshold value of the element is applied immediately before selection period $t_{01}$ and Frederick's transition is brought about, a pulse with the same polarity and whose voltage absolute value is 0 is applied and the OFF state selected in selection period $t_{01}$. In nonselection period $t_{02}$, a pulse whose voltage absolute value is lower than the threshold value of the element is applied, thus maintaining the same state. In ON selection frame $t_1$, a pulse ($-V_2$) with a polarity opposite that of the pulse applied immediately before it is applied in selection period $t_{11}$ and the ON state is selected. Since a pulse whose voltage absolute value is lower than the threshold value of the element is applied in nonselection period $t_{12}$, the same state is maintained. The driving waveforms of this embodiment are equivalent to those in the third embodiment where $V_2 = V_3$. When the element was operated at 30°C and with $V_1 = 30.0$ V, $V_2 = 1.0$ V, $V_3 = 1.0$ V, pulse width $P_w = 250$ μs, and a duty ratio of 1/400 ($t_{01} = t_{11} = 500$ μs, $t_0 = t_1 = 400 \times 500$ μs), selective switching of the element described above was possible. The optical response corresponding to the driving waveforms when operated with polarizing plates, where a 360-degree twisted state is the dark state and the uniform state is the bright (light transmission) state, is shown in FIG. 7. In the figure, $F_1$ and $F_4$ indicate OFF selection frames, $F_2$ and $F_3$ indicate ON selection frames, and $T_1$, $T_2$, $T_3$ and $T_4$ are each selection periods. The light transmittance in the bright state with this optical arrangement was 72 percent, and the contrast ratio between the two states was 68.

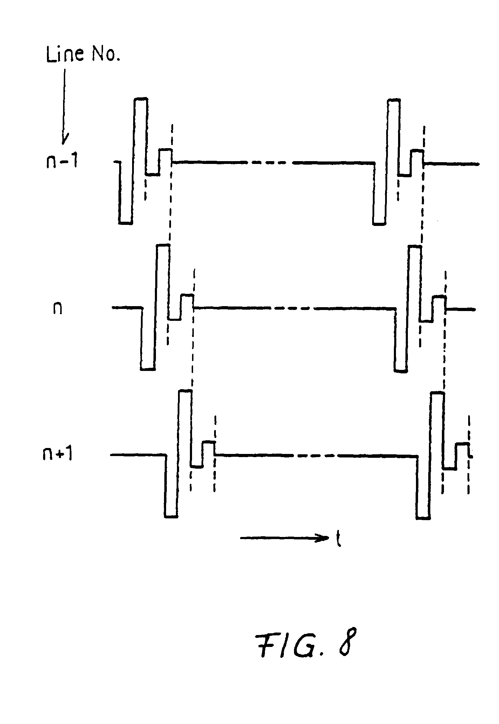

FIG. 8 shows the timing of waveforms applied to selected adjacent scanning electrodes when the driving waveforms of the third embodiment and this embodiment are applied to a matrix comprising plural electrodes and line-sequential scanning is performed.

Fifth Embodiment

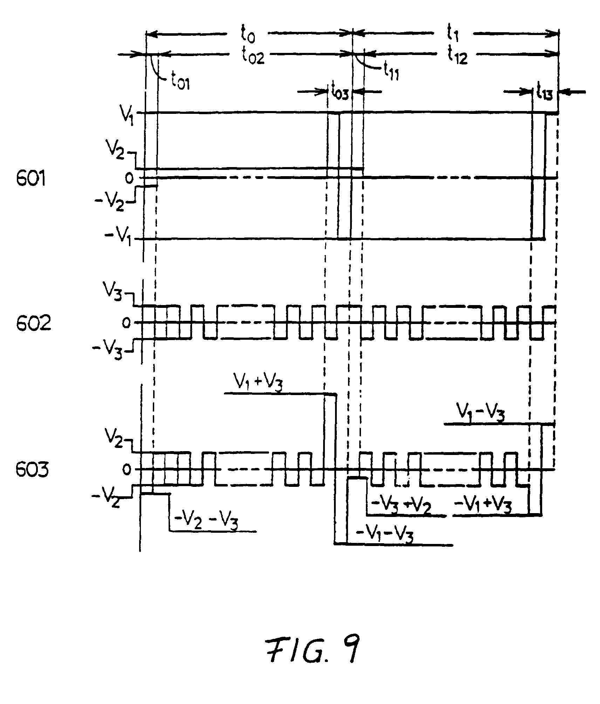

FIG. 9 shows other driving waveforms applied in the liquid crystal display device of the third embodiment. In the figure, 601 is the scanning electrode waveform, 602 is the signal electrode waveform and 603 is a composite waveform of 601 and 602. $t_0$ and $t_1$ indicate frames (scanning time for one screen) in which a uniform state (i.e., ON) and a 360-degree twisted state (i.e., OFF) are selected, respectively. $t_{01}$ and $t_{11}$ correspond to selection periods, and $t_{02}$, $t_{03}$ and $t_{12}$, $t_{13}$ correspond to nonselection periods. At the end of the nonselection period, a period is established in which a voltage pulse such as $\pm(V_1 + V_3)$ in $t_{03}$ and $\pm(V_1 - V_3)$ in $t_{13}$ whose absolute value is greater than the threshold value of the element is applied to bring about Frederick's transition. In ON selection frame $t_0$, after a voltage pulse (not shown) whose absolute value is greater than the threshold value of the element is applied immediately before selection period $t_{01}$ and Frederick's transition is brought about, a pulse with opposite polarity and whose voltage absolute value is $|V_3 + V_2|$ is applied and the ON state selected in selection period $t_{01}$. In nonselection period $t_{02}$, a pulse whose voltage absolute value is lower than the threshold value of the element is applied, thus maintaining the same state. In OFF selection frame $t_1$, a pulse ($-V_3 + V_2$) with the same polarity as that of the pulse applied immediately before it is applied in selection period $t_{11}$ and the OFF state is selected. Since a pulse whose voltage absolute value is lower than the threshold value of the element is applied in nonselection period $t_{12}$, the same state is maintained. When the element was operated at 30°C and with $V_1 = 30.0$ V, $V_2 = 1.0$ V, $V_3 = 1.5$ V, pulse width $P_w = 400$ μs, and a duty ratio of 1/400 ($t_{01} = t_{11} = 400$ μs, $t_0 = t_1 = 400 \times 400$ μs), selective switching of the element described above was possible. Also, the polarity of the applied waveform is inverted in two temporally adjacent frames in this embodiment, thereby avoiding an excessive DC component to be applied to the element.

Sixth Embodiment

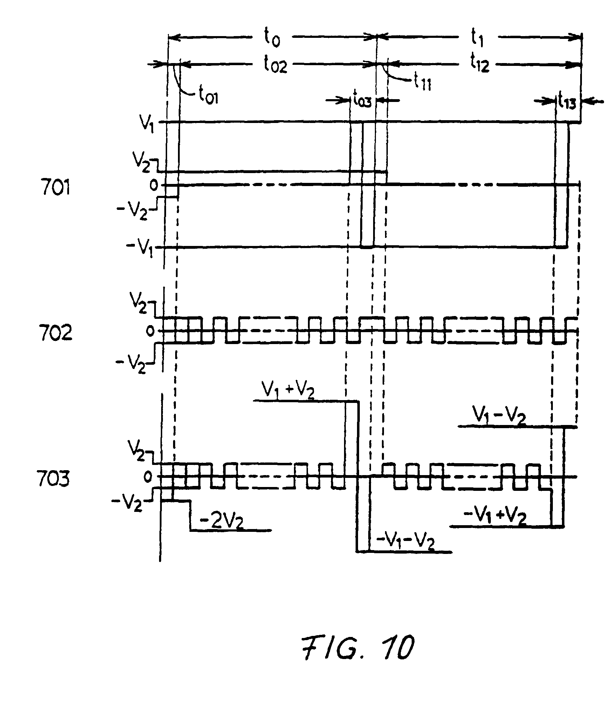

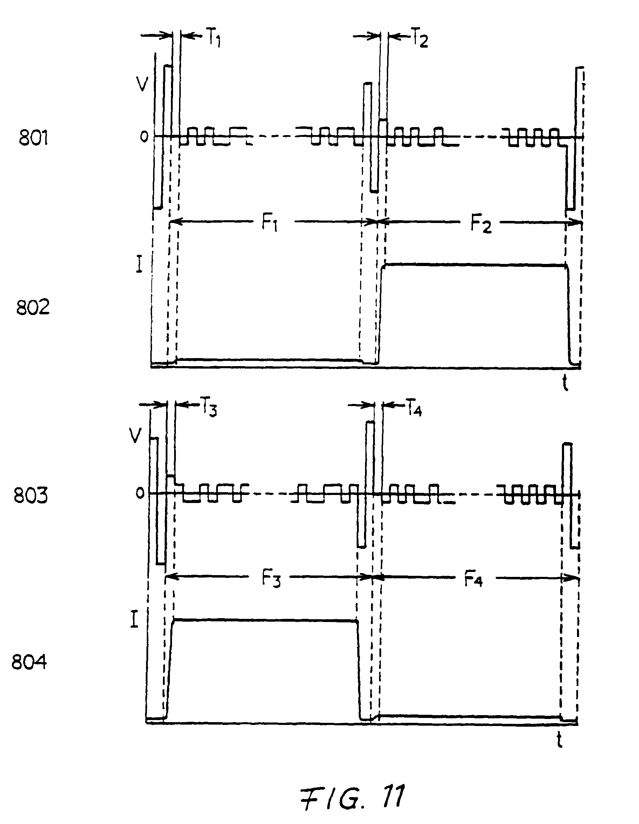

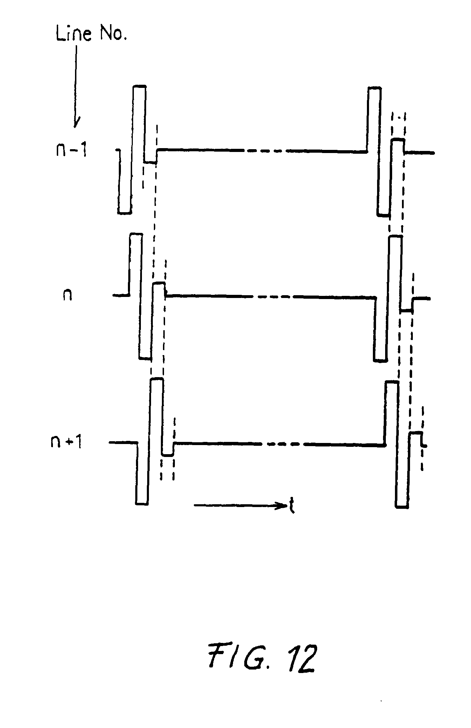

FIG. 10 shows other driving waveforms applied in the liquid crystal display device of the third embodiment. In the figure, 701 is the scanning electrode waveform, 702 is the signal electrode waveform and 703 is a composite waveform of 701 and 702. $t_0$ and $t_1$ indicate frames (scanning time for one screen) in which a uniform state (i.e., ON) and a 360-degree twisted state (i. e., OFF) are selected, respectively. $t_{01}$ and $t_{11}$ correspond to selection periods, and $t_{02}$, $t_{03}$ and $t_{12}$, $t_{13}$ correspond to nonselection periods. At the end of the nonselection periods, a period is established in which a voltage pulse such as $\pm(V_1 + V_2)$ in $t_{03}$ and $\pm(V_1 - V_2)$ in $t_{13}$ whose absolute value is greater than the threshold value of the element is applied to bring about Frederick's transition. In ON selection frame $t_0$, after a voltage pulse (not shown) whose absolute value is greater than the threshold value of the element is applied immediately before selection period $t_{01}$ and Frederick's transition is brought about, a voltage pulse ($-2V_2$) with a polarity opposite that of the pulse applied immediately before it is applied and the ON state selected in selection period $t_{01}$. In nonselection period $t_{02}$, a pulse whose voltage absolute value is lower than the threshold value of the element is applied, thus maintaining the same state. In OFF selection frame $t_1$, a pulse whose voltage absolute value is 0 is applied in selection period $t_{11}$ and the ON state is selected. Since a pulse whose voltage absolute value is lower than the threshold value of the element is applied in nonselection period $t_{12}$, the same state is maintained. The driving waveforms of this embodiment are equivalent to those in the third embodiment where $V_2 = V_3$. When the element was operated at 30°C and with $V_1 = 30.0$ V, $V_2 = 1.0$ V, pulse width $P_w = 400$ μs, and a duty ratio of 1/400 ($t_{01} = t_{11} = 400$ μs, $t_0 = t_1 = 400 \times 400$ μs), selective switching of the element described above was

possible. The optical response corresponding to the driving waveforms when operated with polarizing plates, where a 360-degree twisted state is the dark state and the uniform state is the bright (light transmission) state, is shown in FIG. 11. In the figure, $F_1$ and $F_4$ indicate OFF selection frames, $F_2$ and $F_3$ indicate ON selection frames, and $T_1$, $T_2$, $T_3$ and $T_4$ are each selection periods. The light transmittance in the bright state with this optical arrangement was 75 percent, and the contrast ratio between the two states was 66. FIG. 12 shows the timing of waveforms applied to selected adjacent scanning electrodes when the driving waveforms of the fifth embodiment and this embodiment are applied to a matrix comprising plural electrodes and line-sequential scanning is performed. Also, the polarity of the applied waveform is inverted in two temporally adjacent frames in this embodiment, thereby avoiding an excessive DC component to be applied to the element.

Seventh Embodiment

An optically active compound (E. Merck, Darmstadt, S811) was added to the liquid crystal material (E. Merck, Darmstadt, ZLI-1557), which demonstrates a nematic phase at room temperature, to adjust it to a helical pitch p of 3.5 µm. The cell comprised polyimide alignment layers disposed on a scanning electrode group and signal electrode group formed from ITO and rubbed in opposing parallel directions (180 degrees) on the upper and lower substrates separated by a gap d of 1.8 µm. When the above liquid crystal material was infused, the interface pretilt angles near the upper and lower substrates were approximately 5 degrees with opposite signs, and since p/4 < d < 3p/4, the orientation of the liquid crystal molecules took on a 180-degree twisted state with a helical axis in the normal direction of the substrate. The structure of the liquid crystal display element is similar to that outlined in FIG. 1. The element of this configuration generates two metastable states with roughly a 0-degree twisted (uniform) state and roughly a 360-degree twisted state depending on the applied driving waveforms. We sandwiched the liquid crystal panel obtained in this manner between two polarizing plates and fabricated a liquid crystal display device using the circuit configuration shown in FIG. 4 to confirm the effectiveness of the invention. In the explanation below, the threshold voltages for bringing about Frederick's transition in the initial state (180-degree twist), approximately 0-degree twisted (uniform) state and approximately 360-degree twisted state are indicated by $V_{th}(180)$, $V_{th}(0)$ and $V_{th}(360)$, respectively, and these are collectively referred to as $V_{th}$. Also, the voltage critical value when selecting one of the two metastable states according to the magnitude of the root-mean-square value of the voltage pulse group applied immediately after bringing about Frederick's transition is indicated by $V_c$.

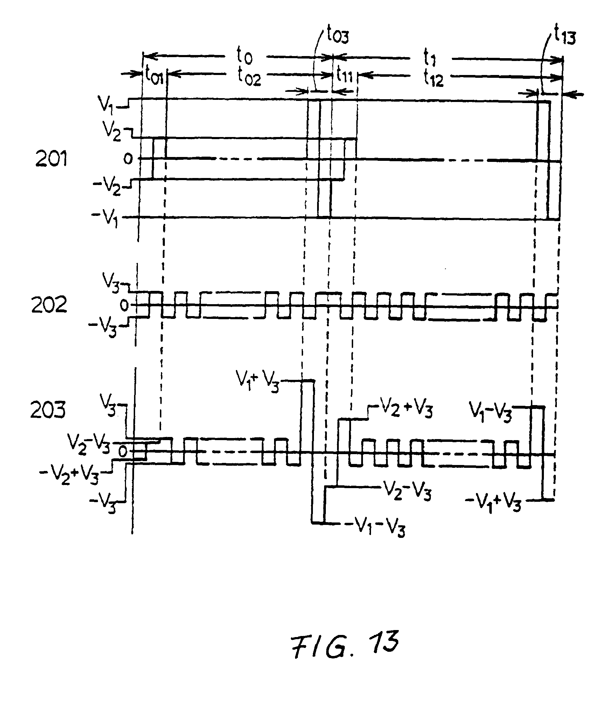

The driving waveforms of this embodiment are shown in FIG. 13. In the figure, 201 is the scanning electrode waveform, 202 is the signal electrode waveform, and 203 is a composite waveform of 201 and 202. $t_0$ and $t_1$ indicate frames (scanning time for one screen) in which a 360-degree twisted state (i.e., OFF) and uniform state (i.e., ON) are selected, respectively. $t_{01}$ and $t_{11}$ correspond to selection periods, while $t_{02}$, $t_{03}$ and $t_{12}$, $t_{13}$ correspond to nonselection periods. At the end of the nonselection period, a period is established in which a voltage pulse such as $\pm(V_1 + V_3)$ in $t_{03}$ and $\pm(V_1 - V_3)$ in $t_{13}$ whose absolute value is greater than $V_{th}$ is applied to bring about Frederick's transition. In OFF selection frame $t_0$, after a voltage pulse (not shown) whose absolute value is greater than $V_{th}$ is applied immediately before selection period $t_{01}$ and Frederick's transition is brought about, a pulse $\pm(V_2 - V_3)$ whose voltage absolute value is less than $V_c$ is applied and the OFF state selected in selection period $t_{01}$. In nonselection period $t_{02}$, a pulse $\pm V_3$ whose voltage absolute value is less than $V_{th}(0)$ and $V_{th}(360)$ is applied, thus maintaining the same state. In ON selection frame $t_1$, a pulse $\pm(V_2 - V_3)$ whose absolute value is greater than $V_c$ is applied in selection period $t_{11}$ and the ON state is selected. Since a pulse $\pm V_3$ whose voltage absolute value is less than $V_{th}(0)$ and $V_{th}(360)$ is applied in nonselection period $t_{12}$, the same state is maintained. When the element was operated at 30°C and with $V_1 = 30.0$ V, $V_2 = 1.5$ V, $V_3 = 1.0$ V, pulse width $P_w = 250$ µs, and a duty ratio of 1/400 ($t_{01} = t_{11} = 500$ µs, $t_0 = t_1 = 400 \times 500$ µs), selective switching of the element described above was possible.

Eighth Embodiment

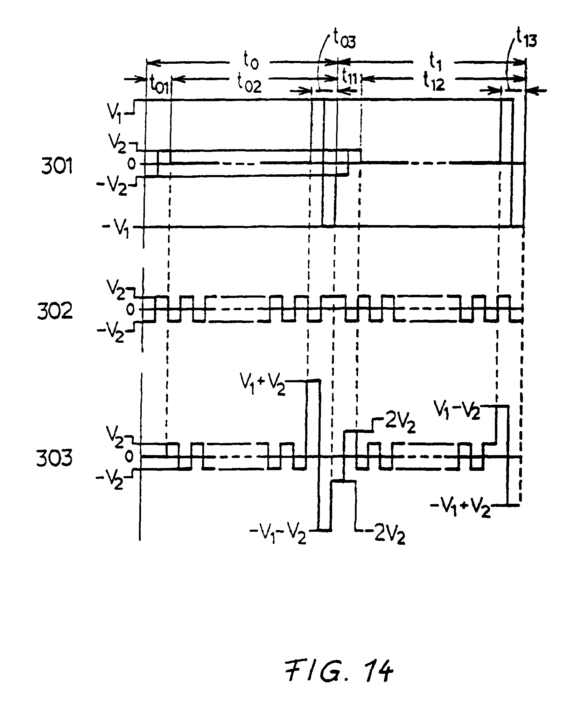

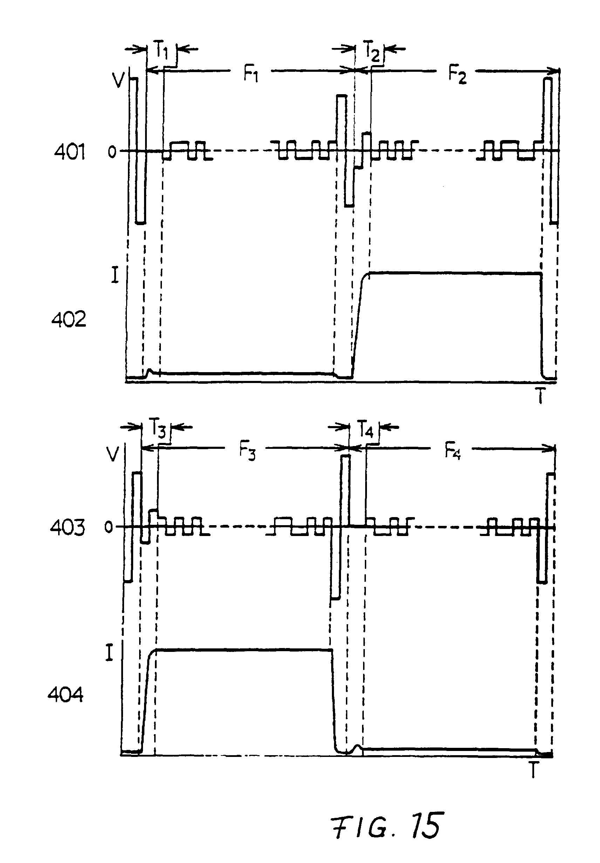

Other driving waveforms applied in the liquid crystal display device of the seventh embodiment are shown in FIG. 14. In the figure, 301 is the scanning electrode waveform, 302 is the signal electrode waveform and 303 is a composite waveform of 301 and 302. $t_0$ and $t_1$ indicate frames (scanning time for one screen) in which a 360-degree twisted state (i.e., OFF) and uniform state (i.e., ON) are selected, respectively. $t_{01}$ and $t_{11}$ correspond to selection periods, and $t_{02}$, $t_{03}$ and $t_{12}$, $t_{13}$ correspond to nonselection periods. At the end of the nonselection periods, a period is established in which a voltage pulse such as $\pm(V_1 \pm V_2)$ in $t_{03}$ and $t_{13}$ whose absolute value is greater than $V_{th}$ is applied to bring about Frederick's transition. In OFF selection frame $t_0$, after a voltage pulse (not shown) whose absolute value is greater than $V_{th}$ is applied immediately before selection period $t_{01}$ and Frederick's transition is brought about, a pulse whose voltage absolute value is 0 ($\leq V_c$) is applied and the OFF state selected in selection period $t_{01}$. In nonselection period $t_{02}$, a pulse $\pm V_2$ whose voltage absolute value is less than $V_{th}(0)$ and $V_{th}(360)$ is applied, thus maintaining the same state. In ON selection frame $t_1$, a pulse $\pm 2V_2$ with an absolute value greater than $V_c$ is applied in selection period $t_{11}$ and the ON state is selected. Since a pulse $\pm V_2$ whose voltage absolute value is less than $V_{th}(0)$ and $V_{th}(360)$ is applied in nonselection period $t_{12}$, the same state is maintained. The driving waveforms of this embodiment are equivalent to those in the seventh embodiment where $V_2 = V_3$. When the element was operated at 30°C and with $V_1 = 30.0$ V, $V_2 = 1.0$ V, pulse width $P_w = 250$ μs, and a duty ratio of 1/400 ($t_{01} = t_{11} = 500$ μs, $t_0 = t_1 = 400 \times 500$ μs), selective switching of the element described above was possible. The optical response corresponding to the driving waveforms when operated with polarizing plates, where a 360-degree twisted state is the dark state and the uniform state is the bright (light transmission) state, is shown in FIG. 15. In the figure, $F_1$ and $F_4$ indicate OFF selection frames, $F_2$ and $F_3$ indicate ON selection frames, and $T_1$, $T_2$, $T_3$ and $T_4$ are each selection periods. The light transmittance in the bright state with this optical arrangement was 72 percent, and the contrast ratio between the two states was 88.

FIG. 8 shows the timing of waveforms applied to selected adjacent scanning electrodes when the driving waveforms of the seventh embodiment and this embodiment are applied to a matrix comprising plural electrodes and line-sequential scanning is performed.

## Ninth Embodiment

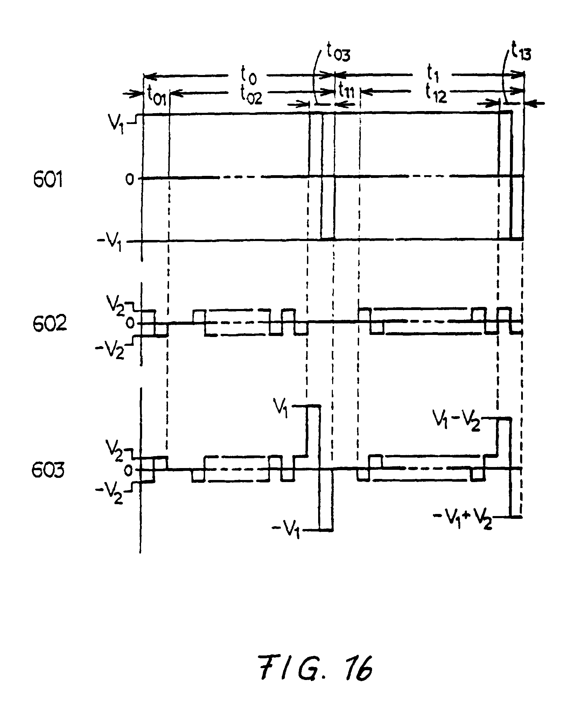

FIG. 16 shows other driving waveforms applied in the liquid crystal display device of the seventh embodiment. In the figure, 601 is the scanning electrode waveform, 602 is the signal electrode waveform and 603 is a composite waveform of 601 and 602. $t_0$ and $t_1$ indicate frames (scanning time for one screen) in which a uniform state (i.e., ON) and a 360-degree twisted state (i.e., OFF) are selected, respectively. $t_{01}$ and $t_{11}$ correspond to selection periods, and $t_{02}$, $t_{03}$ and $t_{12}$, $t_{13}$ correspond to nonselection periods. At the end of the nonselection period, a period is established in which a voltage pulse such as $\pm V_1$ in $t_{03}$ and $\pm(V_1 - V_2)$ in $t_{13}$ whose absolute value is greater than the threshold value of the element is applied to bring about Frederick's transition. In ON selection frame $t_0$, after a voltage pulse (not shown) whose absolute value is greater than $V_{th}$ is applied immediately before selection period $t_{01}$ and Frederick's transition is brought about, a pulse $\pm V_2$ whose voltage absolute value is greater than $V_c$ is applied and the ON state selected in selection period $t_{01}$. In nonselection period $t_{02}$, a pulse $\pm V_2$ whose voltage absolute value is less than $V_{th}(0)$ and $V_{th}(360)$ is applied, thus maintaining the same state. In OFF selection frame $t_1$, a pulse whose absolute value is 0 ($\leq V_c$) is applied in selection period $t_{11}$ and the OFF state is selected. Since a pulse $\pm V_2$ or 0 whose voltage absolute value is less than $V_{th}(0)$ and $V_{th}(360)$ is applied in nonselection period $t_{12}$, the same state is maintained. When the element was operated at 30°C and with $V_1 = 30.0$ V, $V_2 = 2.0$ V, pulse width $P_w = 200$ μs, and a duty ratio of 1/400 ($t_{01} = t_{11} = 400$ μs, $t_0 = t_1 = 400 \times 400$ μs), selective switching of the element described above was possible.

## Tenth Embodiment

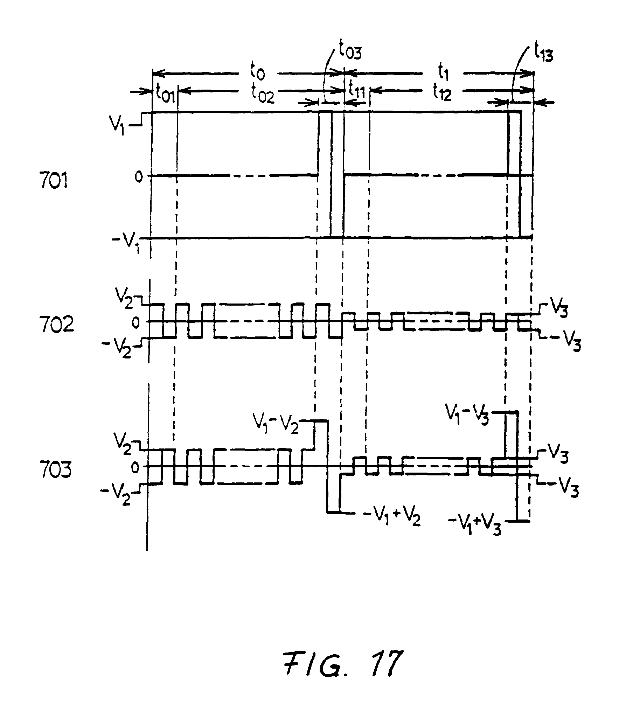

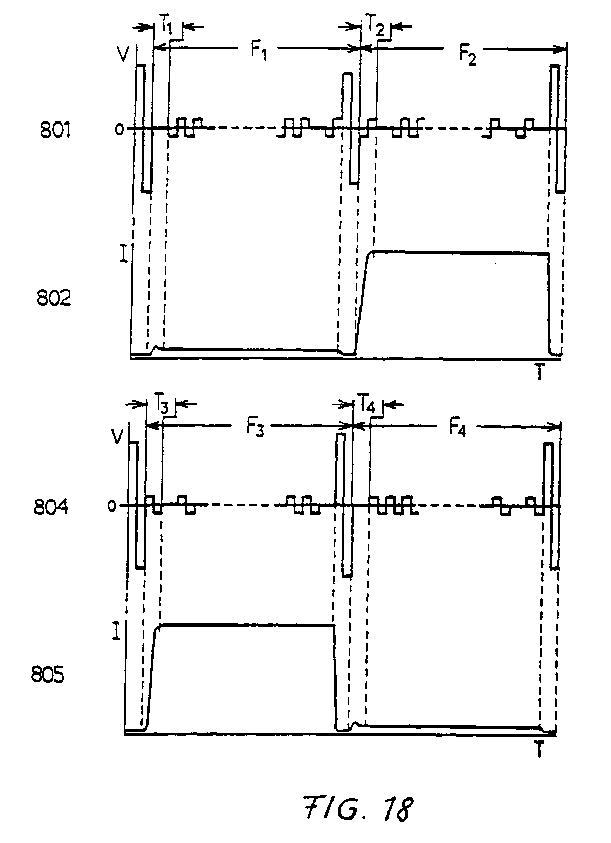

FIG. 17 shows other driving waveforms applied in the liquid crystal display device of the seventh embodiment. In the figure, 701 is the scanning electrode waveform, 702 is the signal electrode waveform and 703 is a composite waveform of 701 and 702. $t_0$ and $t_1$ indicate frames (scanning time for one screen) in which a uniform state (i.e., ON) and a 360-degree twisted state (i.e., OFF) are selected, respectively. $t_{01}$ and $t_{11}$ correspond to selection periods, and $t_{02}$, $t_{03}$ and $t_{12}$, $t_{13}$ correspond to nonselection periods. At the end of the nonselection period, a period is established in which a voltage pulse such as $\pm(V_1 - V_2)$ in $t_{03}$ and $\pm(V_1 - V_3)$ in $t_{13}$ whose absolute value is greater than $V_{th}$ is applied to bring about Frederick's transition. In ON selection frame $t_0$, after a voltage pulse (not shown) whose absolute value is greater than $V_{th}$ is applied immediately before selection period $t_{01}$ and Frederick's transition is brought about, a voltage pulse $\pm V_2$ whose absolute value is greater than $V_c$ is applied and the ON state selected in selection period $t_{01}$. In nonselection period $t_{02}$, a pulse $\pm V_2$ or $\pm V_3$ whose voltage absolute value is lower than $V_{th}(0)$ and $V_{th}(360)$ is applied, thus maintaining the same state. In OFF selection frame $t_1$, a pulse whose voltage absolute value is less than $V_c$ is applied in selection period $t_{11}$ and the OFF state is selected. Since a pulse $\pm V_2$ or $\pm V_3$ whose voltage absolute value is lower than $V_{th}(0)$ and $V_{th}(360)$ is applied in nonselection period $t_{12}$, the same state is maintained. When the element was operated at 30°C and with $V_1 = 30.0$ V, $V_2 = 2.0$ V, $V_3 = 0.5$ V, pulse width $P_w = 200$ μs, and a duty ratio of 1/400 ($t_{01} = t_{11} = 400$ μs, $t_0 = t_1 = 400 \times 400$ μs), selective switching of the element described above was possible. The optical response corresponding to the driving waveforms when operated with polarizing plates, where a 360-degree twisted state is the dark state and the uniform state is the bright (light transmission) state, is shown in FIG. 18. In the figure, $F_1$ and $F_4$ indicate OFF selection frames, $F_2$ and $F_3$ indicate ON selection frames, and $T_1$, $T_2$, $T_3$ and $T_4$ are each selection periods. The light transmittance in the bright state with this optical arrangement was 75 percent, and the contrast ratio between the two states was 66.

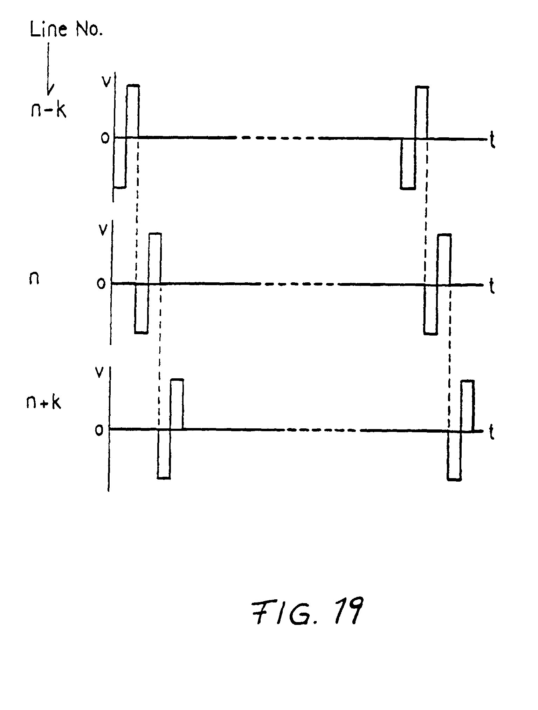

FIG. 19 shows the timing of waveforms applied to selected adjacent scanning electrodes when the driving waveforms of the ninth embodiment and this embodiment are applied to a matrix comprising plural electrodes and line-sequential scanning is performed.

## Eleventh Embodiment

Where the voltage critical values are $V_{c1}$ and $V_{c2}$ when one or the other of the two metastable states is selected depending on the magnitude of the root-mean-square value of the voltage pulse group applied immediately after bringing about Frederick's transition, then the metastable state generated is roughly 360-degree twisted state when $0 \leq V_r < V_{c1}$ roughly 0-degree twisted (uniform) state when $V_{c1} \leq V_r < V_{c2}$ roughly 360-degree twisted state when $V_{c2} \leq V_r$.

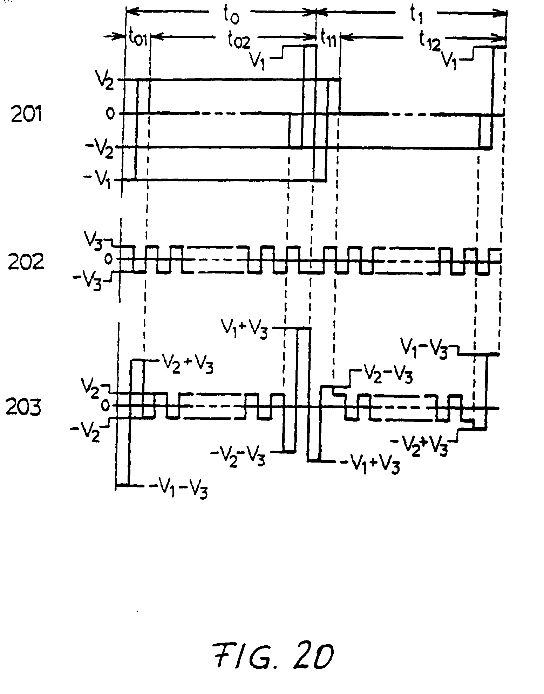

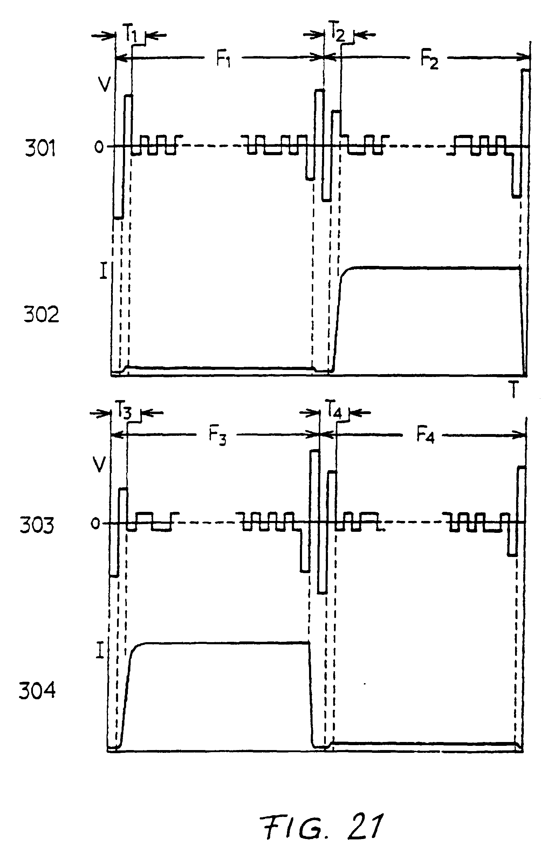

Other driving waveforms applied in the liquid crystal display device of the seventh embodiment are shown in FIG. 20. In the figure, 201 is the scanning electrode waveform, 202 is the signal electrode waveform and 203 is a composite waveform of 201 and 202. $t_0$ and $t_1$ indicate frames (scanning time for one screen) in which a 360-degree twisted state (i.e., OFF) and the uniform state (i.e., ON) are selected, respectively. $t_{01}$ and $t_{11}$ correspond to selection periods, and $t_{02}$ and $t_{12}$ correspond to nonselection periods. At the end of the nonselection period and in the first half of the selection period, a period is established in which a voltage pulse whose absolute value, which becomes $\pm(V_1 \pm V_3)$ depending on the superposed signal waveform, is greater than $V_{th}$ is applied to bring about Frederick's transition. In OFF selection frame $t_0$, after a voltage pulse $(-V_1 - V_3)$ whose absolute value is greater than $V_{th}$ is applied in the first half of selection period $t_{01}$ and Frederick's transition is brought about, a pulse $(V_2 + V_3)$ whose voltage absolute value is greater than $V_{c2}$ is applied and the OFF state selected in the last half of the period. In nonselection period $t_{02}$, a pulse $(\pm V_3)$ whose voltage absolute value is less than $V_{th}(0)$ and $V_{th}(360)$ is applied, thus maintaining the same state. In ON selection frame $t_1$, a voltage pulse $(-V_1 + V_3)$ whose absolute value is greater than $V_{th}$ is applied in the first half of selection period $t_{11}$ and Frederick's transition is brought about, after which a pulse $(V_2 - V_3)$ whose absolute value is greater than or equal to $V_{c1}$ and less than $V_{c2}$ is applied in the last half of the period and the ON state is selected. Since a pulse $\pm V_3$ whose voltage absolute value is less than $V_{th}(0)$ and $V_{th}(360)$ is applied in nonselection period $t_{12}$, the same state is maintained. When the element was operated at 30°C and with $V_1$ = 30.0 V, $V_2$ = 12.0 V, $V_3$ = 2.0 V, pulse width $P_w$ = 250 μs, and a duty ratio of 1/400 ($t_{01} = t_{11}$ = 500 μs, $t_0 = t_1$ = 400 x 500 μs), selective switching of the element described above was possible. The optical response corresponding to the driving waveforms when operated with polarizing plates, where a 360-degree twisted state is the dark state and the uniform state is the bright (light transmission) state, is shown in FIG. 21. In the figure, $F_1$ and $F_4$ indicate OFF selection frames, $F_2$ and $F_3$ indicate ON selection frames, and $T_1$, $T_2$, $T_3$ and $T_4$ are each selection periods. The light transmittance in the bright state with this optical arrangement was 72 percent, and the contrast ratio between the two states was 88.

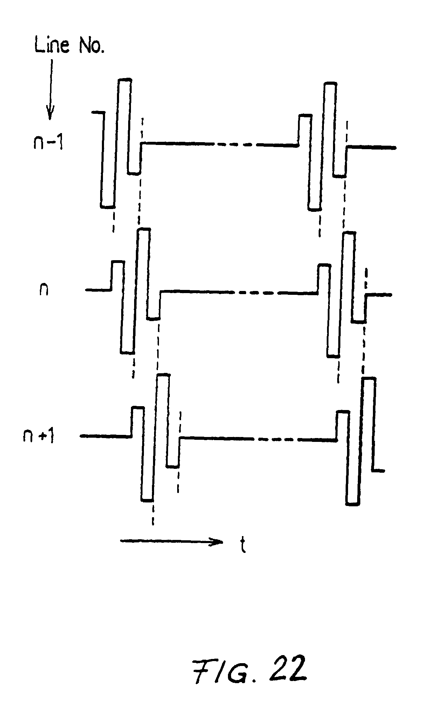

FIG. 22 shows the timing of waveforms applied to selected adjacent scanning electrodes when the driving waveforms of this embodiment are applied to a matrix comprising plural electrodes and line-sequential scanning is performed.

Twelfth Embodiment

An optically active compound (E. Merck, Darmstadt, S811) was added to a liquid crystal material (E. Merck, Darmstadt, MJ90179) available on the market to adjust it to a helical pitch p of 3.6 μm. The cell comprised polyimide alignment layers disposed on a scanning electrode group and signal electrode group formed from ITO and rubbed in opposing parallel directions (180 degrees) on the upper and lower substrates separated by a gap d of 2.0 μm. When the above liquid crystal material was infused, the interface pretilt angles near the upper and lower substrates were approximately 4 degrees with opposite signs, and since p/4 < d < 3p/4, the orientation of the liquid crystal molecules took on a 180-degree twisted state with a helical axis in the normal direction of the substrate. The structure of the liquid crystal display element is similar to that outlined in FIG. 1. The element of this configuration generates two metastable states with roughly a 0-degree twisted (uniform) state and roughly a 360-degree twisted state depending on the applied driving waveforms. We used the liquid crystal panel obtained in this manner to fabricate a liquid crystal display device with the circuit configuration shown in FIG. 4 in order to confirm the effectiveness of the invention.

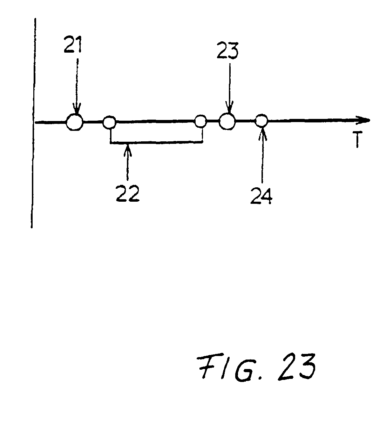

A basic outline of this embodiment is shown in FIG. 23, wherein time is plotted on the horizontal axis T, 21 indicates powering ON of the power source, 22 indicates the duration the reset pulse is applied, 23 indicates the start of write scanning, and 24 indicates powering ON of the illumination means. Assuming a liquid crystal display element member with two metastable states which differ from the initial orientation state and that switches between those two metastable states, a configuration is employed with a reset pulse period in which a voltage waveform for switching the initial orientation state to one of the two metastable states after powering ON 21 is applied and that begins actual write scanning 23 by display data when the illumination means is switched ON 24. If the liquid crystal display element is a reflective type and does not require an illumination means, the item regarding switching ON of the illumination means may, of course, be omitted.

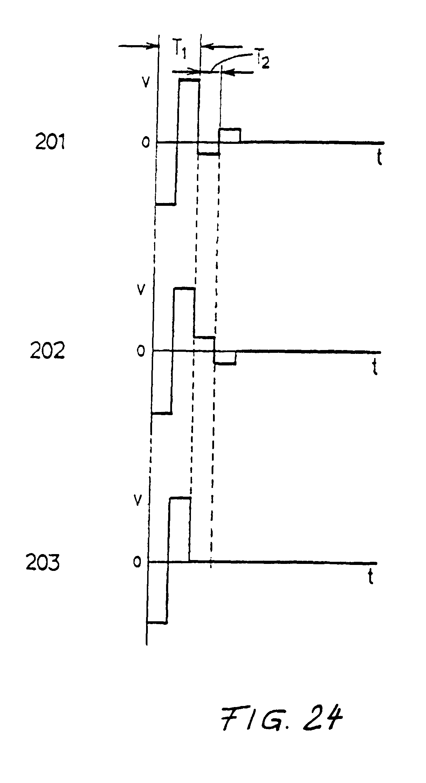

FIG. 24 shows an example of the driving waveforms applied to the liquid crystal layer during reset pulse period 22. In the figure, $T_1$ is a period during which a pulse whose voltage absolute value is greater than the threshold value is applied to bring about Frederick's transition in the liquid crystal, and $T_2$ is a period during which a pulse whose polarity is the opposite (201) or the same (202) with respect to the last pulse of $T_1$ or whose absolute value is zero (203) is applied for selecting one or the other of the metastable states. The waveform of 201 generates a metastable state with a twist angle of roughly ($\Phi$-180 degrees) with respect to the twist angle $\Phi$ of the initial state, and the waveforms of 202 and 203 generate a metastable state with a twist angle of roughly

($\Phi$+180 degrees). When a voltage of $\pm30$ V was applied in $T_1$ with a pulse duration of 500 $\mu$s and was applied to the liquid crystal display device described above, a uniform orientation was obtained with the waveform of 201 which applied a voltage of -1.5 V in $T_2$, and an orientation with roughly a 360-degree twist was obtained with the waveform of 202 and 203 which applied a voltage of +1.5 V in $T_2$.

## Thirteenth Embodiment

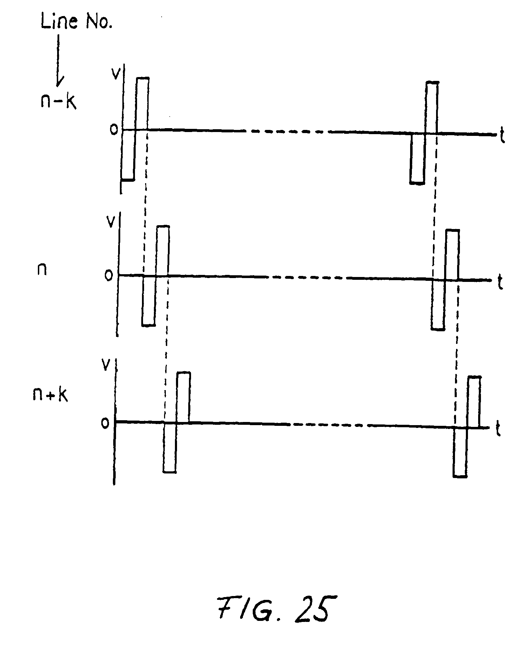

Using the driving waveform of the twelfth embodiment, an example is described that yields a similar effect by line-sequential scanning. FIG. 25 shows the timing when a driving waveform is applied to (2k + 1) adjacent scanning electrodes whose center is the nth electrode by shifting the phase every k number of scanning electrodes. In the figure, the phase difference is equivalent to two pulses using the waveform of 203 in FIG. 24, but the waveform of 201 and 202 in FIG. 24 can be used, or the phase difference may be set as desired. Assuming k = 1, then line-sequential scanning is performed on every other scanning electrode, and if k $\geq$ 2, then scanning is performed in blocks. As in the twelfth embodiment, the waveform of 201 generates a metastable state with a twist angle of roughly ($\Phi$-180 degrees) with respect to the twist angle $\Phi$ of the initial state, and the waveform of 202 and 203 generates a metastable state with a twist angle of roughly ($\Phi$+180 degrees). When the liquid crystal display device described above was applied using the voltage and pulse duration conditions of the twelfth embodiment and with k = 1, a uniform orientation was obtained with the waveform of 201 and a roughly 360-degree twisted orientation was obtained with the waveform of 202 and the waveform of 203.

## Fourteenth Embodiment

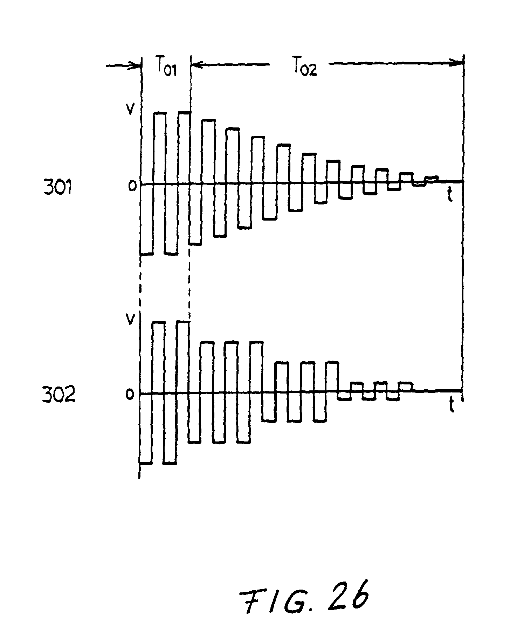

FIG. 26 shows examples of driving waveforms in the twelfth and thirteenth embodiments comprising a period in which the driving waveform for generating one of the two metastable states applies a voltage pulse with an absolute value greater than the threshold value in the initial state and applies a voltage pulse group whose absolute value for generating Frederick's transition in the liquid crystal molecules is greater than the threshold value of the element and a period in which the voltage absolute value of the voltage pulse group is reduced gradually or in plural steps and a metastable state with a twist angle of roughly ($\Phi$-180 degrees) with respect to the twist angle of the liquid crystal in the initial state is generated. In the figure, $T_{01}$ corresponds to the period during which Frederick's transition is generated in the liquid crystal molecules, and $T_{02}$ corresponds to the period during which the voltage absolute value is reduced. Also, 301 and 302 indicate the cases in which the voltage is reduced continuously and in steps, respectively. By applying this to the aforementioned liquid crystal display device, a metastable state with a uniform orientation was obtained.

By means of the methods described in the twelfth to the fourteenth embodiments, the liquid crystal display goes to a uniform orientation state when the backlight or other illumination means is switched ON or when operation begins and the subsequent write scanning starts smoothly.

## Fifteenth Embodiment

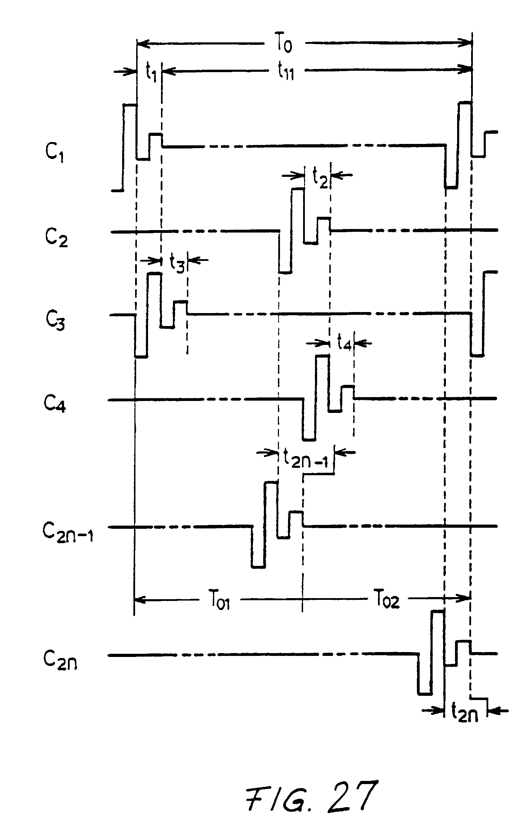

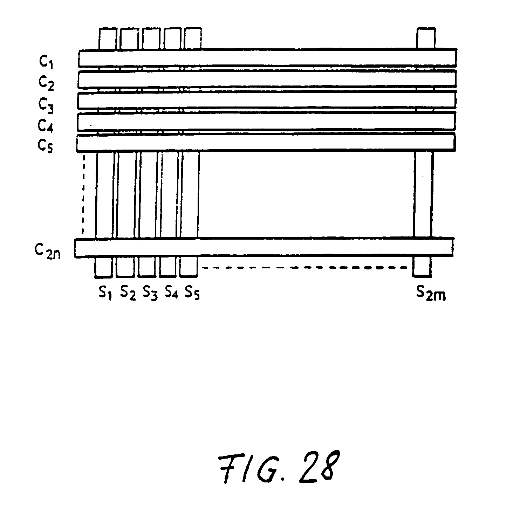

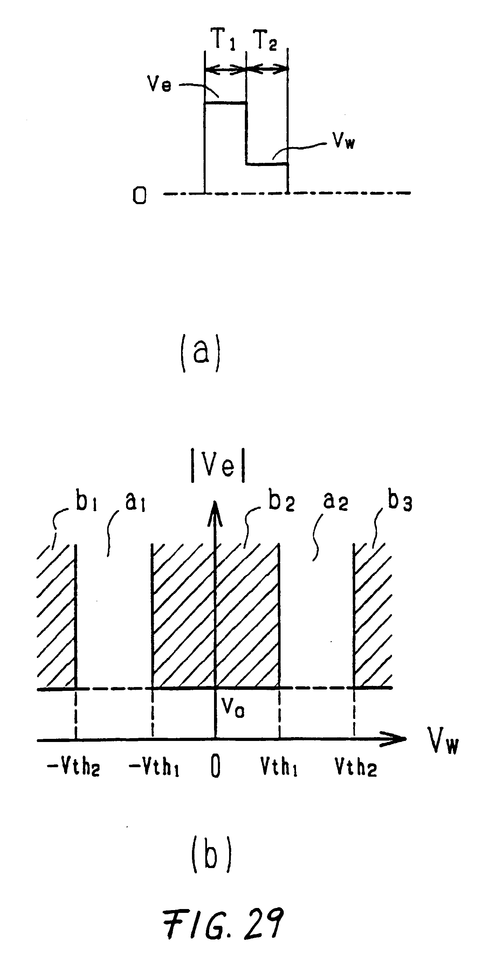

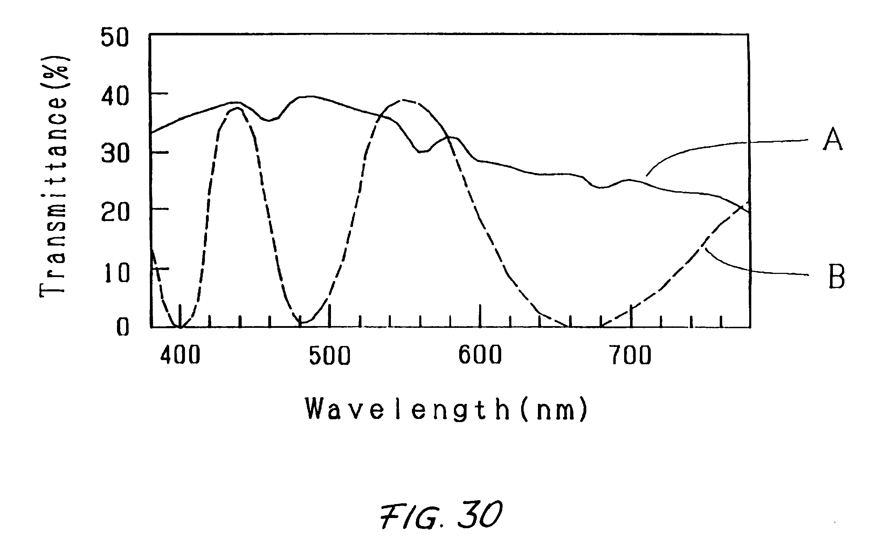

FIG. 27 shows the voltage waveforms applied to scanning electrodes $C_1$ - $C_4$, $C_{2n-1}$ and $C_{2n}$ when the scanning electrodes are divided up into two blocks each comprising a number of n odd-numbered rows and n even-numbered rows and each is line-sequentially scanned; i.e., they are scanned in the order $C_1$, $C_3$, $C_5$, ..., $C_{2n-1}$, $C_2$, $C_4$, $C_6$, ..., $C_{2n}$, in the time-shared addressing of a display element comprising a total number of 2n (n is an integer) scanning electrodes ($C_1$, $C_2$, ..., $C_{2n}$) as shown in FIG. 28 and their timing. In the figure, $t_1$ is the selection period for scanning electrode $C_1$, and $t_{11}$ is the nonselection period. Immediately after $t_1$, the selection period for $C_3$ is set, immediately after which the selection period for $C_5$ (not shown) is set, and the selection and scanning of the odd-numbered rows is finished in $T_{01}$. In the following period of $T_{02}$, the even-numbered rows are similarly selected and scanned such that one screen of information is written during $T_0$ (= $T_{01}$ + $T_{02}$). By applying the method described above to the voltage drive waveforms of each of the above embodiments, the apparent scanning period could be shorted by one half, and flicker in display due to screen scanning could be reduced. Also, in this embodiment, we showed an example in which scanning was performed by skipping every other scanning electrode so that one screen of information was written by scanning the screen twice, but the number of scanning electrodes skipped and the number of blocks they are divided up into can be set as desired. When a number of n scanning electrodes is divided up into blocks each having k scanning electrodes and one screen is formed by scanning n/k times, where the time (selection period) required to select one row is Ts, then the following relationship should be satisfied

$$k/(Ts * n) \geq fc$$

fc: critical frequency (Hz) at which an observer becomes aware of flicker

## Sixteenth Embodiment

Since the liquid crystal display element of the invention uses two metastable states in display, a written display is retained as a memory condition over a fixed period (Tm below). Therefore, the continuous scanning of all scanning electrodes is performed in cycles defined by

fref > 1/Tm (Hz)

and upon completion of one continuous scanning, the display of an entire screen can be maintained by line-sequentially applying a selection waveform in the period

1/fref - Ts * n (n: all scanning electrodes)

to only the scanning electrodes containing the area where it becomes necessary to rewrite the display information. When we applied the above method using fref = 1.67 x $10^{-2}$ (Hz) to the driving waveforms of each of the above embodiments, except for the period during which scanning of the entire screen was performed in one cycle every 60 seconds, there were no optical fluctuations in areas where display information was not rewritten, and in areas where it became necessary to rewrite display information (scanning line number ns), display was realized in which overall flicker was reduced because partial scanning was performed at a frequency of 1/(TS·ns) (Hz).

Effectiveness of the Invention

As described above, by means of the liquid crystal display device of the invention, a high speed multiplex-driven liquid crystal display device can be realized with a high contrast ratio and wide effective viewing angle by using switching between two metastable states which can be selected as desired by the applied waveform. Also, since the selected state is retained as a memory state over a period (approximately 10 minutes) at least greater than the scanning time for one screen, the invention can be applied to a high precision display with a large number of scanning lines and driven by simple matrix driving. The invention is applicable to not only direct-view liquid crystal display devices but also to various types of light valves, spatial light modulators, the print head of electronic photographic systems, etc.

## Claims

1. A liquid crystal display device comprising:

   a pair of transparent substrates with electrodes (3, 4, 5) equipped with liquid crystal alignment layers (2),
   a chiral nematic liquid crystal sandwiched between said substrates with electrodes (3, 4, 5), said liquid crystal having a twisted structure of twist angle $\Phi$ in an initial state before any voltage having been applied across said substrates with electrodes (3, 4, 5), and
   means for sequentially applying across said substrates with electrodes (3, 4, 5)

   - a first voltage larger than a threshold value ($V_0$) so as to cause a Frederick's transition of said liquid crystal,
   - a second voltage below or above a critical value ($Vth_1$, $Vth_2$) lower than said threshold value so as to cause said liquid crystal to relax to one of two metastable states different from said initial state, and
   - a third voltage so as to maintain said one metastable state.

2. The device of claim 1 wherein the third voltage is equal to or less than the threshold voltage.

3. The device of claim 1 or 2 wherein pretilt angles ($\theta_1$, $\theta_2$) formed by the liquid crystal's director vectors at the interfaces between the liquid crystal and each of the liquid crystal alignment layers (2), with the respective surface of the pair of transparent substrates with electrodes (3, 4, 5) in said initial state have opposite signs.

4. The device of claim 1, 2 or 3 wherein the twist angle of the liquid crystal is $\Phi$-180 degrees in a first one and $\Phi + 180$ degrees in a second one of said two metastable states.

5. The device of claim 4 wherein there are plural critical values and said first metastable state is selected when the absolute value of said second voltage is below the critical value of the lowest absolute value.

6. The device of claim 4 wherein there are plural critical values and said second metastable state is selected when the absolute value of said second voltage is between the critical value of the lowest absolute value and the critical value of the next lowest absolute value.

7. The device of any one of the preceding claims wherein a scanning electrode group ($C_1$-$C_{2n}$) and a signal electrode group ($S_1$-$S_{2m}$) are disposed on said pair of transparent substrates with electrodes, respectively, said electrode groups defining a matrix of picture elements, and means are provided for driving the picture elements by time-shared addressing.

8. The device of any one of the preceding claims wherein said first voltage to bring about the Frederick's transition is applied in a first period, said second voltage to select one of the two metastable states is applied in a subsequent second period, and said third voltage to maintain a selected one of the metastable states is applied during a third period.

9. The device of claim 8 wherein the twist angle of the liquid crystal molecules in a metastable state is $\Phi +$ 180 degrees when the absolute value of the voltage in the second period is between zero and the critical value.

10. A method of driving a liquid crystal display device as defined in claim 7, wherein a periodic drive voltage including said first to third voltages is applied to each picture element, the period composed of a selection period and a nonselection period, said first and second voltages being applied during the selection period and said third voltage being applied during the nonselection period.

11. A method of driving a liquid crystal display device as defined in claim 7, wherein a periodic drive voltage including said first to third voltages is applied to each picture element, the period composed of a selection period and a nonselection period, said second voltage being applied during the selection period and said third and first voltages being applied during the nonselection period.

12. The method of claim 10 or 11, wherein prior to applying said periodic drive voltage the liquid crystal is initialized to one of said metastable states by applying said first and second voltages to all picture elements.

13. The method of claim 12, wherein all picture elements are initialized simultaneously.

14. The method of claim 12 wherein all picture elements have a first period and a second period sequentially every plural number of scanning electrodes.

15. The method of any one of claims 12 to 14, wherein a plurality of pulses of said first and second voltages are applied to initialize the liquid crystal.

16. The method of claim 10 or 11, wherein the scanning electrode group ($C_1$-$C_{2n}$) is divided into n blocks of k scanning electrodes each, n and k being integers and $k \leq n$, and each block is line-sequentially scanned such that each screen is time-shared n/k times.

17. A method of driving a liquid crystal display device as defined in claim 7, wherein a drive voltage including said first and second voltages is once applied to each picture element, and subsequently such drive voltage is applied only to each line of the picture elements defined by the same scanning electrode ($C_1$-$C_{2n}$) and including a picture element for which the metastable state of the liquid crystal is desired to be changed.

18. A driving method for a liquid crystal display device that sandwiches chiral nematic liquid crystal between a pair of transparent substrates with electrodes equipped with liquid crystal alignment layers, where said chiral nematic liquid crystal has a twisted structure in its initial state and has two metastable states different from said initial state as relaxation states after a voltage that brings about a Frederick's transition in said initial state is applied, wherein after the Frederick's transition is brought about, one of the metastable states is generated by applying a voltage pulse whose absolute value is selected using a critical value that generates one of the metastable states as a reference, after which the selected metastable state is maintained by applying a voltage pulse below the threshold value in the two metastable states.

19. The method of claim 18 wherein a scanning electrode group and a signal electrode group are disposed on the pair of transparent substrates with electrodes, respectively, and the picture elements comprising those respective groups are driven by time-shared addressing.

20. The method of claim 19 wherein Frederick's transition is brought about and one of the metastable states is selected in the selection period in time-shared addressing and the selected metastable state is maintained in the nonselection period.

21. The method of claim 19 wherein one of the metastable states is selected in a selection period in time-shared addressing and the selected metastable state is maintained and Frederick's transition is brought about in a nonselection period.

22. The method of claim 19 wherein Frederick's transition is brought about for all picture elements and one of the metastable states is selected before time-shared addressing.

**Patentansprüche**

1. Flüssigkristallanzeige-Vorrichtung, umfassend:

   ein Paar transparenter Substrate mit Elektroden (3, 4, 5), die mit Flüssigkristall-Ausrichtungsschichten (2) versehen sind, einen chiralen, nematischen Flüssigkristall, der in Zwischenlage zwischen den Substraten mit Elektroden (3, 4, 5) angeordnet ist, wobei der Flüssigkristall eine verdrillte Struktur mit einem Verdrillungswinkel $\Phi$ in einem ursprünglichen Zustand aufweist, bevor Spannung an die Substrate mit Elektroden (3, 4, 5) angelegt worden ist, und

Mittel zum sequentiellen Anlegen an die Substrate mit Elektroden (3, 4, 5)

- einer ersten Spannung, die größer als ein Schwellenwert ($V_0$) ist, um einen Frederick-Übergang des Flüssigkristalls zu bewirken,
- einer zweiten Spannung unterhalb oder oberhalb eines kritischen Werts ($Vth_1$, $Vth_2$), der kleiner als der Schwellenwert ist, um zu bewirken, daß der Flüssigkristall in einen von zwei metastabilen Zuständen relaxiert, die sich vom ursprünglichen Zustand unterscheiden, und
- einer dritten Spannung, um den metastabilen Zustand beizubehalten.

2. Vorrichtung nach Anspruch 1, bei der die dritte Spannung gleich oder kleiner als die Schwellenspannung ist.

3. Vorrichtung nach Anspruch 1 oder 2, bei der Prä-Anstellwinkel ($\theta_1$, $\theta_2$), die von den Direktorvektoren des Flüssigkristalls an der Grenzfläche zwischen dem Flüssigkristall und einer jeweiligen der Flüssigkristall-Ausrichtungsschichten (2) mit der jeweiligen Oberfläche des Paars transparenter Substraten mit Elektroden (3, 4, 5) in dem ursprünglichen Zustand gebildet werden, entgegengesetzte Vorzeichen aufweisen.

4. Vorrichtung nach Anspruch 1, 2 oder 3, bei der der Verdrillungswinkel des Flüssigkristalls $\Phi$ - 180 Grad in einem ersten und $\Phi$ + 180 Grad in einem zweiten der zwei metastabilen Zustände beträgt.

5. Vorrichtung nach Anspruch 4, bei der mehrere kritische Werte vorhanden sind und der erste metastabile Zustand ausgewählt ist, wenn der Absolutwert der zweiten Spannung unter dem kritischen Wert des niedrigsten Absolutwerts liegt.

6. Vorrichtung nach Anspruch 4, bei der mehrere kritische Werte vorhanden sind und der zweite metastabile Zustand ausgewählt ist, wenn der Absolutwert der zweiten Spannung zwischen dem kritischen Wert des niedrigsten Absolutwerts und dem kritischen Wert des zweitniedrigsten Absolutwerts liegt.

7. Vorrichtung nach einem der vorhergehenden Ansprüche, bei der eine Abtastelektrodengruppe ($C_1$ - $C_{2n}$) bzw. eine Signalelektrodengruppe ($S_1$ - $S_{2m}$) auf dem Paar transparenter Substrate mit Elektroden angeordnet sind, wobei die Elektrodengruppen eine Matrix aus Bildelementen definieren, und Mittel zur Ansteuerung der Bildelemente durch Zeitmultiplexadressierung vorgesehen sind.

8. Vorrichtung nach einem der vorhergehenden Ansprüche, bei der die erste Spannung zum Herbeiführen des Frederick-Übergangs in einer ersten Periode, die zweite Spannung zur Wahl eines der zwei metastabilen Zustände in einer nachfolgenden zweiten Periode und die dritte Spannung zur Beibehaltung eines ausgewählten der metastabilen Zustände während einer dritten Periode angelegt wird.

9. Vorrichtung nach Anspruch 8, bei der der Verdrillungswinkel der Flüssigkristallmoleküle in einem metastabilen Zustand $\Phi$ + 180 Grad beträgt, wenn der Absolutwert der Spannung in der zweiten Periode zwischen null und dem kritischen Wert liegt.

10. Verfahren zur Ansteuerung einer Flüssigkristallanzeigevorrichtung gemäß Anspruch 7, bei dem eine die erste bis dritte Spannung umfassende periodische Ansteuerspannung an jedes Bildelement angelegt wird, die Periode aus einer Auswahlperiode und einer Nichtauswahlperiode zusammengesetzt ist, die erste und die zweite Spannung während der Auswahlperiode angelegt und die dritte Spannung während der Nichtauswahlperiode angelegt werden.

11. Verfahren zur Ansteuerung einer Flüssigkristallanzeigevorrichtung gemäß Anspruch 7, bei dem eine die erste bis dritte Spannung umfassende periodische Ansteuerspannung an jedes Bildelement angelegt wird, die Periode aus einer Auswahlperiode und einer Nichtauswahlperiode zusammengesetzt ist, die zweite Spannung während der Auswahlperiode angelegt und die dritte sowie die erste Spannung während der Nichtauswahlperiode angelegt werden.

12. Verfahren nach Anspruch 10 oder 11, bei dem vor dem Anlegen der periodischen Ansteuerspannung der Flüssigkristall auf einen der metastabilen Zustände initialisiert wird, indem die erste und die zweite Spannung an alle Bildelemente angelegt werden.

13. Verfahren nach Anspruch 12, bei dem alle Bildelemente gleichzeitig initialisiert werden.

14. Verfahren nach Anspruch 12, bei dem alle Bildelemente sequentiell jeweils nach einer Mehrzahl von Abtastelektroden eine erste Periode und eine zweite Periode aufweisen.

15. Verfahren nach einem der Ansprüche 12 bis 14, bei dem eine Mehrzahl von Impulsen der ersten und der zweiten Spannung angelegt wird, um den Flüssigkristall zu initialisieren.

**16.** Verfahren nach Anspruch 10 oder 11, bei dem die Abtastelektrodengruppe ($C_1$ - $C_{2n}$) in n Blöcke mit jeweils k Abtastelektroden unterteilt ist, wobei n und k ganze Zahlen sind und k ≤ n gilt, und jeder Block zeilensequentiell abgetastet wird, so daß jeder Bildschirm n/k mal in zeitlich gemultiplext ist.

**17.** Verfahren zur Ansteuerung einer Flüssigkristallanzeigevorrichtung gemäß Anspruch 7, bei dem eine die erste und die zweite Spannung umfassende Ansteuerspannung einmal an jedes Bildelement angelegt wird und nachfolgend eine derartige Ansteuerspannung nur an die jeweils von derselben Abtastelektrode ($C_1$ - $C_{2n}$) definierte Bildelementzeile angelegt wird, die ein Bildelement enthält, für das der metastabile Zustand des Flüssigkristalls zu ändern ist.

**18.** Ansteuerverfahren für eine Flüssigkristallanzeigevorrichtung, bei der ein chiraler nematischer Flüssigkristall in Zwischenlage zwischen einem Paar transparenter Substrate mit Elektroden, die mit Flüssigkristall-Ausrichtungsschichten versehen sind, angeordnet ist, bei dem der chirale nematische Flüssigkristall eine verdrillte Struktur in seinem ursprünglichen Zustand aufweist und, nachdem im ursprünglichen Zustand eine Spannung angelegt wird, die einen Frederick-Übergang herbeiführt, zwei sich vom ursprünglichen Zustand unterscheidende metastabile Zustände als Relaxationszustände aufweist, wobei nach dem Herbeiführen des Frederick-Übergangs einer der metastabilen Zustände durch Anlegen eines Spannungsimpulses erzeugt wird, dessen Absolutwert unter Verwendung eines kritischen Werts als Referenz gewählt wird, der einen der metastabilen Zustände erzeugt, wonach der ausgewählte metastabile Zustand durch Anlegen eines Spannungsimpulses unterhalb des Schwellenwerts in den zwei metastabilen Zuständen aufrechterhalten wird.

**19.** Verfahren nach Anspruch 18, bei dem eine Abtastelektrodengruppe bzw. eine Signalelektrodengruppe auf dem Paar transparenter Substrate mit Elektroden angeordnet sind und die diese jeweiligen Gruppen umfassenden Bildelemente durch Zeitmultiplexadressierung angesteuert werden.

**20.** Verfahren nach Anspruch 19, bei dem ein Frederick-Übergang herbeigeführt wird und einer der metastabilen Zustände in der Auswahlperiode in Zeitmultiplexadressierung ausgewählt wird und der ausgewählte metastabile Zustand in der Nichtauswahlperiode beibehalten wird.

**21.** Verfahren nach Anspruch 19, bei dem einer der metastabilen Zustände in einer Auswahlperiode in Zeitmultiplexadressierung ausgewählt sowie der ausgewählte metastabile Zustand beibehalten wird und der Frederick-Übergang in einer Nichtauswahlperiode herbeigeführt wird.

**22.** Verfahren nach Anspruch 19, bei dem ein Frederick-Übergang bei allen Bildelementen herbeigeführt und einer der metastabilen Zustände vor der Zeitmultiplexadressierung ausgewählt wird.

**Revendications**

**1.** Dispositif d'affichage à cristal liquide comprenant :

une paire de substrats transparents ayant des électrodes (3, 4, 5) munies de couches (2) d'alignement de cristal liquide,
un cristal liquide nématique chiral intercalé entre lesdits substrats ayant des électrodes (3, 4, 5), le cristal liquide ayant une structure torsadée ayant un angle de torsion Φ, dans un état initial avant qu'une tension quelconque ait été appliquée aux bornes des substrats ayant des électrodes (3, 4, 5) et
des moyens destinés à appliquer séquentiellement aux bornes des substrats ayant des électrodes (3, 4, 5)

- une première tension supérieure à une valeur de seuil ($V_0$) de façon à provoquer une transition de Frederick du cristal liquide,
- une seconde tension inférieure ou supérieure à une valeur critique ($Vth_1$, $Vth_2$) inférieure à la valeur de seuil afin de provoquer une relaxation du cristal liquide à l'un de deux états métastables différents de l'état initial, et
- une troisième tension destinée à maintenir cet état métastable.

**2.** Dispositif suivant la revendication 1, dans lequel la troisième tension est égale ou inférieure à la tension de seuil.

**3.** Dispositif suivant la revendication 1 ou 2, dans lequel des angles de pré-inclinaison ($\theta_1$, $\theta_2$) formés par les vecteurs directeurs du cristal liquide aux interfaces entre le cristal liquide et chacune des couches (2) d'alignement du cristal liquide, par rapport à la surface respective de la paire de substrats transparents ayant des électrodes (3, 4, 5) dans l'état initial., ont des signes opposés.

**4.** Dispositif suivant la revendication 1, 2 ou 3, dans lequel l'angle de torsion du cristal liquide est de Φ-180 degrés dans un premier des deux états métastables et de Φ+180 degrés dans un second des deux états métastables.

**5.** Dispositif suivant la revendication 4, dans lequel il existe des valeurs critiques multiples et le premier état métastable est sélectionné lorsque la valeur absolue de la seconde tension est inférieure à la valeur critique ayant la valeur absolue la plus faible.

**6.** Dispositif suivant la revendication 4, dans lequel il existe plusieurs valeurs critiques et le second état métastable est sélectionné lorsque la valeur absolue de la seconde tension est comprise entre la valeur critique ayant la valeur absolue la plus faible et la valeur critique ayant la valeur absolue la plus faible suivante.

**7.** Dispositif suivant l'une quelconque des revendications précédentes, dans lequel un groupe d'électrodes de balayage ($C_1$-$C_{2n}$) et un groupe d'électrodes de signal ($S_1$-$S_{2m}$) sont respectivement disposés sur la paire de substrats transparents ayant des électrodes, les groupes d'électrodes définissant une matrice d'éléments d'image, et des moyens sont prévus pour attaquer les éléments d'image par adressage par partage de temps.

**8.** Dispositif suivant l'une quelconque des revendications précédentes, dans lequel la première tension destinée à provoquer la transition de Frederick est appliquée au cours d'une première période, la seconde tension destinée à sélectionner l'un des deux états métastables est appliquée au cours d'une seconde période suivante, et la troisième tension destinée à maintenir l'un sélectionné des états métastables, est appliquée pendant une troisième période.

**9.** Dispositif suivant la revendication 8 dans lequel l'angle de torsion des molécules de cristal liquide dans un état métastable est de $\Phi$+180 degrés lorsque la valeur absolue de la tension au cours de la seconde période est comprise entre zéro et la valeur critique.

**10.** Procédé d'attaque d'un dispositif d'affichage à cristal liquide suivant la revendication 7, dans lequel une tension d'attaque périodique comportant les première à troisième tensions est appliquée à chaque élément d'image, la période se composant d'une période de sélection et d'une période de non-sélection, les première et seconde tensions étant appliquées pendant la période de sélection, et la troisième tension étant appliquée pendant la période de non-sélection.

**11.** Procédé d'attaque d'un dispositif d'affichage à cristal liquide suivant la revendication 7, dans lequel une tension d'attaque périodique comportant les première à troisième tensions est appliquée à chaque élément d'image, la période se composant d'une période de sélection et d'une période de non-sélection, la seconde tension étant appliquée pendant la période de sélection, et les troisième et première tensions étant appliquées pendant la période de non sélection.

**12.** Procédé suivant la revendication 10 ou 11, dans lequel, avant l'application de la tension d'attaque périodique, le cristal liquide est initialisé à l'un des états métastables par application des première et seconde tensions à tous les éléments d'image.

**13.** Procédé suivant la revendication 12, dans lequel tous les éléments d'image sont initialisés simultanément.

**14.** Procédé suivant la revendication 12, dans lequel tous les éléments d'image ont une première période et une seconde période se suivant séquentiellement à raison d'une sur plusieurs électrodes de balayage.

**15.** Procédé suivant l'une quelconque des revendications 12 à 14, dans lequel une pluralité d'impulsions des première et seconde tensions sont appliquées pour initialiser le cristal liquide.

**16.** Procédé suivant l'une quelconque des revendications 10 ou 11, dans lequel le groupe d'électrodes de balayage ($C_1$-$C_{2n}$) est divisé en n blocs de k électrodes de balayage chacun, n et k étant des entiers, et k - n, et chaque bloc est balayé séquentiellement par ligne, de telle façon que chaque écran soit partagé n/k fois dans le temps.

**17.** Procédé d'attaque d'un dispositif d'affichage à cristal liquide suivant la revendication 7, dans lequel une tension d'attaque comportant les première et seconde tensions est appliquée une fois à chaque élément d'image, puis cette tension d'attaque n'est appliquée qu'à chaque ligne des éléments d'image qui est définie par la même électrode de balayage ($C_1$-$C_{2n}$) et qui contient l'élément d'image pour lequel on souhaite modifier l'état métastable du cristal liquide.

**18.** Procédé d'attaque destiné à un dispositif d'affichage à cristal liquide qui intercale un cristal liquide nématique chiral entre une paire de substrats transparents ayant des électrodes munies de couches d'alignement du cristal liquide, le cristal liquide nématique chiral ayant une structure torsadée dans son état initial et ayant deux états métastables différents de l'état initial en tant qu'états de relaxation après qu'une tension provoquant une transition de Frederick dans cet état initial ait été appliquée, dans lequel, après que la transition de Frederick a été provoquée, l'une des états métastables est produit par application d'une impulsion de tension dont la valeur absolue est sélectionnée en utilisant une valeur critique qui engendre l'un des états métastables en tant que référence, l'état métastable sélectionné étant ensuite maintenu par application d'une impulsion de tension inférieure à la valeur de seuil dans les deux états métastables.

19. Procédé suivant la revendication 18, dans lequel un groupe d'électrodes de balayage et un groupe d'électrodes de signal sont respectivement disposés sur la paire de substrats transparents ayant des électrodes et les éléments d'image comprenant ces groupes respectifs sont attaqués par adressage par partage de temps.

20. Procédé suivant la revendication 19, dans lequel la transition de Frederick est provoquée et l'un des états métastable est sélectionné au cours de la période de sélection de l'adressage par partage de temps et l'état métastable sélectionné est maintenu au cours de la période de non sélection.

21. Procédé suivant la revendication 19, dans lequel l'un des états métastables est sélectionné au cours d'une période de sélection de l'adressage par partage de temps et l'état métastable sélectionné est maintenu et la transition de Frederick est provoquée lors d'une seconde période de non-sélection.

22. Procédé suivant la revendication 19, dans lequel la transition de Frederick est provoquée pour tous les éléments d'image et l'un des états métastables est sélectionné avant l'adressage par partage de temps.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

*FIG. 14*

FIG. 15

FIG. 16

FIG. 17

FIG. 18

FIG. 19

FIG. 20

FIG. 21

FIG. 22

*FIG. 23*

FIG. 24

FIG. 25

FIG. 26

FIG. 27

FIG. 28

(a)

(b)

FIG. 29

*FIG. 30*

EP 0 569 029 B1

*FIG. 31*

FIG. 32

FIG. 33

EP 0 569 029 B1

FIG.34